Europäisches Patentamt

European Patent Office

Office européen des brevets

(19)

(11) EP 0 482 476 B1

(12) EUROPÄISCHE PATENTSCHRIFT

(45) Veröffentlichungstag und Bekanntmachung des Hinweises auf die Patenterteilung:
21.05.1997 Patentblatt 1997/21

(51) Int Cl.⁶: **C08J 9/34**, C08G 18/08, C08K 7/26
// (C08G18/08, 101:00)

(21) Anmeldenummer: 91117554.5

(22) Anmeldetag: 15.10.1991

(54) **Verfahren zur Herstellung von Fluorchlorkohlenwasserstoff freien Urethangruppen enthaltenden, weichelastischen Formkörpern mit einem zelligen Kern und einer verdichteten Randzone**

Process for the preparation of molded flexible elastic articles containing urethane groups, devoid of fluorochlorohydrocarbons, having a cellular core and a compact outer layer

Procédé de préparation de corps élastiques souples obtenus par moulage, contenant des groupes d'uréthane, dépourvus de fluorochlorohydrocarbures et ayant un noyau cellulaire et une couche externe compacte

(84) Benannte Vertragsstaaten:
AT BE CH DE DK ES FR GB IT LI NL SE

(30) Priorität: 26.10.1990 DE 4034082

(43) Veröffentlichungstag der Anmeldung:
29.04.1992 Patentblatt 1992/18

(73) Patentinhaber: BASF Aktiengesellschaft
67063 Ludwigshafen (DE)

(72) Erfinder:
• Horn, Peter, Dr.
W-6900 Heidelberg (DE)
• Hoelderich, Wolfgang, Dr.
W-6710 Frankenthal (DE)
• Taddey, Rudolf
W-2845 Damme (DE)
• Tintelnot, Dieter
W-2840 Diepholz (DE)

(56) Entgegenhaltungen:
EP-A- 388 952          EP-A- 0 319 866
DE-A- 1 804 362

• Kunststoff-Handbuch, "Polyurethane", G. Oertel, 2. Aufl., Bd. 7, Carl-Hanser-Verlag, München 1983, S. 344, 345 und 352-366
• Römpp Chemie Lexikon, 9. Aufl., Georg Thieme Verlag, Stuttgart 1989, S. 700, 701 und 1313

**Beschreibung**

Gegenstand der Erfindung ist ein Verfahren zur Herstellung von Fluorchlorkohlenwasserstoff freien Urethangruppen enthaltenden, weichelastischen Formkörpern mit einem zelligen Kern und einer verdichteten Randzone mit einer im wesentlichen porenfreien, glatten Oberfläche, sogenannten Polyurethan(PU)-Integralschaumstoffen, durch Umsetzung von üblichen Ausgangsstoffen zur Bildung der Polyisocyanat-polyadditionsprodukte in Gegenwart von Wasser und/oder physikalisch wirkenden Treibmitteln mit Ausnahme von Fluorchlorkohlenwasserstoffen, Katalysatoren, kristallinen, mikroporösen Molekularsieben mit einem Durchmesser der Hohlräume und einer Zutrittsöffnung zu den Hohlräumen von kleiner als 1,3 nm aus Metalloxiden oder Metallphosphaten sowie gegebenenfalls weiteren Zusatzstoffen und Hilfsmitteln.

Die Herstellung von Formkörpern mit einem zelligen Kern und einer verdichteten Randzone durch Umsetzung von organischen Polyisocyanaten, höhermolekularen Verbindungen mit mindestens zwei reaktiven Wasserstoffatomen und gegebenenfalls Kettenverlängerungsmitteln in Gegenwart von Treibmitteln, vorzugsweise physikalisch wirkenden Treibmitteln, Katalysatoren, Hilfs- und/oder Zusatzstoffen in einem geschlossenen, gegebenenfalls temperierten Formwerkzeug ist seit langem bekannt und wird beispielsweise beschrieben in der DE-OS 16 94 138 (GB 1 209 243), DE-PS 19 55 891 (GB 1 321 679) und DE-AS 17 69 886 (US 3 824 199).

Eine zusammenfassende Übersicht über derartige Formkörper, sogenannte Polyurethan-Integralschaumstoffe, wurde beispielsweise veröffentlicht in Kunststoff-Handbuch, Band 7, Polyurethane, herausgegeben von Dr. G. Oertel, Carl-Hanser-Verlag, München, Wien, 2. Auflage, 1983, Seiten 333ff. und in Integralschaumstoffe von Dr. H. Piechota und Dr. H. Röhr, Carl-Hanser-Verlag, München, Wien, 1975.

Obgleich die Herstellung von weichelastischen PU-Integralschaumstoff-Formkörpern eine außerordentliche technische Bedeutung erlangt hat, weisen die beschriebenen Verfahren aufgrund des gesteigerten Umweltbewußtseins hinsichtlich der verwendeten Treibmittel Mängel auf. Als Treibmittel werden weltweit in großem Maßstabe Fluorchloralkane, vorzugsweise Trichlorfluormethan, eingesetzt, die unter dem Einfluß der exothermen Polyadditionsreaktion zunächst verdampfen, danach bei erhöhtem Druck an der kühleren Innenwand des Formwerkzeugs partiell kondensiert und in den Formkörper eingelagert werden. Nachteilig an diesen Treibgasen ist lediglich die Belastung der Umwelt, da sie in Verdacht stehen, in der Stratosphäre am Abbau der Ozonschicht beteiligt zu sein.

Zur Reduzierung der Fluorchloralkane wird als Treibmittel vorwiegend Wasser eingesetzt, das mit dem Polyisocyanat unter Kohlendioxidentwicklung reagiert, welches als eigentliches Treibgas wirkt. Nachteilig an diesem Verfahren ist, daß das gebildete Kohlendioxid unter den im Formwerkzeug vorliegenden Reaktionsbedingungen an der Werkzeuginnenfläche nicht kondensiert wird und so zur Bildung von Formkörpern mit einer porenhaltigen Oberfläche führt.

Nach Angaben der DE-A-1 804 362 (GB 1 285 224) können PU-Schaumstoffe mit einer kompakten Oberfläche und einem zelligen Kern unter Mitverwendung von Alkali-Aluminium-Silikaten mit Zeolithstruktur hergestellt werden. Als Treibmittel finden insbesondere Halogenkohlenwasserstoffe oder Mischungen aus Halogenkohlenwasserstoffen und partiell hydratisierten Alkali-Aluminium-Silikaten oder organische Hydratwasser haltige Verbindungen Verwendung. Durch den Zusatz von Wasser und der Alkali-Aluminium-Silikate sollten trotz der Mitverwendung von Fluorchlorkohlenwasserstoffen schrumpffreie PU-Integralschaumstoff-Formkörper mit Gesamtdichten bis 120 g/Liter hergestellt werden.

Fluorchlorkohlenwasserstoff freie, harte PU-Schaumstoff-Formteile mit einer hohen Oberflächenhärte und einer bei mindestens 300 kg/m$^3$ liegenden Rohdichte werden in der EP-A-0 319 866 (US 4 882 363) beschrieben. Zu ihrer Herstellung finden Polyhydroxylverbindungen oder ein Gemisch organischer Polyhydroxylverbindungen mit einer mittleren Hydroxylfunktionalität von mindestens 2,2 und einer mittleren Hydroxylzahl von mindestens 300 mg KOH/g, als Treibmittel Wasser und/oder Kohlendioxid und als Zusatzmittel zeolithische Absorbentien mit einem Durchmesser der Porenöffnung zu den Absorptionshohlräumen von mindestens 0,7 nm Verwendung.

Die EP-A-0 388 952 beschreibt ein Verfahren zur Herstellung von mit Wasser verschäumten Polyurethanform- und -blockschaumstoffen mit einer verbesserten Flammwidrigkeit, die keine phosphor- oder halogenhaltigen Flammschutzmittel enthalten. Wesentlich für die Durchführung des Verfahrens ist die Verwendung einer Mischung aus einem Polyol und einem Zeolith, der in wäßriger Lösung einen pH-Wert von mindestens 7,0 und eine Oberflächeninfrarothydroxylabsorptionsbande im Bereich von 3400 bis 3600 cm$^{-1}$ besitzt. Die Patentpublikation vermittelt keine Lehre bezüglich einer Beeinflussung der Treibreaktion durch die eingesetzte Polyol-Zeolith-Mischung.

Die genannten Publikationen enthalten keinerlei Hinweise hinsichtlich der Herstellung von weichelastischen PU-Integralschaumstoff-Formkörpern mit einer im wesentlichen porenfreien, glatten Oberfläche, wobei diese zweckmäßigerweise nach der RIM (rection injection molding) -Technik hergestellt werden.

Die Aufgabe der vorliegenden Erfindung bestand somit darin, Urethangruppen enthaltende, weichelastische Formkörper mit einem zelligen Kern und einer verdichteten Randzone mit einer im wesentlichen porenfreien, glatten Oberfläche ohne die Mitverwendung von Fluorchlorkohlenwasserstoffen herzustellen. Die blasenfreie Oberfläche der Formkörper sollte eine Shore-A-Härte aufweisen, die der von mit Fluorchlorkohlenwasserstoffen verschäumten Produkten entspricht. Hierfür geeignete PU-Formulierungen sollten auch in Abwesenheit von Fluorchlorkohlenwasserstoffen als Verdünnungsmittel nach der RIM-Technik gut verarbeitbar sein.

Diese Aufgabe konnte überraschenderweise gelöst werden durch die Mitverwendung von kristallinen, mikroporösen Molekularsieben mit einem Durchmesser der Hohlräume und einer Zutrittsöffnung zu den Hohlräumen von kleiner als 1,3 nm aus Metalloxiden oder Metallphosphaten zur Herstellung der weichelastischen PU-Integralschaumstoff-Formkörper.

Gegenstand der Erfindung ist somit ein Verfahren zur Herstellung von Fluorchlorkohlenwasserstoff freien, Urethangruppen enthaltenden, weichelastischen Formkörpern mit einem zelligen Kern und einer verdichteten Randzone durch Umsetzung von

a) organischen und/oder modifizierten organischen Polyisocyanaten mit
b) mindestens einer höhermolekularen Verbindung mit mindestens zwei reaktiven Wasserstoffatomen und einem Molekulargewicht von 1200 bis 8500 und gegebenenfalls
c) mehrwertigen Alkoholen und/oder hydroxylgruppenhaltigen Polyalkylenoxiden mit Molekulargewichten kleiner als 480 als niedermolekularen Kettenverlängerungs- und/oder Vernetzungsmitteln, wobei die Komponente (b) oder ihre Mischung mit Komponente (c) eine Hydroxylzahl von kleiner als 300 mg KOH/g besitzen und das Äquivalenz-Verhältnis von NCO-Gruppen der Polyisocyanate (a) zur Summe der reaktiven Wasserstoffatome der Komponenten (b) und gegebenenfalls (c) 0,85 bis 1,50:1 beträgt

in Gegenwart von

d) Treibmitteln,
e) Katalysatoren und weiteren
f) Zusatzstoffen

in einem geschlossenen Formwerkzeug unter Verdichtung, das dadurch gekennzeichnet ist, daß man als Zusatzstoff (f) kristalline, mikroporöse Molekularsiebe mit einem Durchmesser der Hohlräume und einer Zutrittsöffnung zu den Hohlräumen von kleiner als 1,3 nm aus Metalloxiden oder Metallphosphaten verwendet, die Wasser gebunden haben und unter den Reaktionsbedingungen der Verschäumung abspalten.

Trotz Zusatz der Molekularsiebe aus Metalloxiden oder Metallphosphaten und der damit verbundenen Viskositätserhöhung der Systemkomponenten, sind diese sehr gut fließfähig und nach der RIM-Technik problemlos verarbeitbar. Die hergestellten weichelastischen PU-Integralschaumstoff-Formteile besitzen eine Randzone höherer Dichte und eine glatte im wesentlichen porenfreie und blasenfreie Oberfläche. Die Shore-A-Härte der Oberfläche entspricht ebenso wie die übrigen mechanischen Eigenschaften der mit Fluorchlorkohlenwasserstoff aufgeschäumter Integralschaumstoff-Formkörper.

Zu den für das erfindungsgemäße Verfahren verwendbaren Aufbaukomponenten (a), (b) und (d) bis (f) sowie gegebenenfalls (c) und (g) und den erfindungsgemäß geeigneten Molekularsieben aus Metalloxiden oder Metallphosphaten ist folgendes auszuführen:

Als organische Polyisocyanate (a) kommen aliphatische, cycloaliphatische, araliphatische und vorzugsweise aromatische mehrwertige Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische und vorzugsweise aromatischen Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 4200 modifiziertes 4,4'-Diphenylmethan-diisocyanat oder 2,4- bzw. 2,6-Toluylen-diisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyether-polyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15 Gew.%, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten, wie z.B. 2,4'-, 4,4'-Diphenylmethan-diisocyanat, Roh-MDI, 2,4- und/oder 2,6-Toluylen-diisocyanat gegebenenfalls gemischt werden.

Besonders bewährt haben sich als organische Polyisocyanate und kommen daher vorzugsweise zur Herstellung der weichelastischen Polyurethan-Integralschaumstoffe zur Anwendung:
NCO-Gruppen enthaltende Prepolymere mit einem NCO-Gehalt von 25 bis 9 Gew.%, insbesondere auf Basis von Polyether- oder Polyester-polyolen und einem oder mehreren Diphenylmethan-diisocyanat-Isomeren, vorteilhafterweise 4,4'-Diphenylmethan-diisocyanat und/oder modifizierte Urethangruppen enthaltende organische Polyisocyanate mit einem NCO-Gehalt von 33,6 bis 15 Gew.%, insbesondere auf Basis von 4,4'-Diphenylmethan-diisocyanat oder Diphenylmethan-diisocyanat-Isomerengemischen, Mischungen aus 2,4-und 2,6-Toluylen-diisocyanaten, Mischungen aus Toluylen-diisocyanaten und Roh-MDI oder insbesondere Mischungen aus den vorgenannten Prepolymeren auf Basis von Diphenylmethan-diisocyanat-Isomeren und Roh-MDI. Die aromatischen Polyisocyanate, modifizierten aromatischen Polyisocyanate oder Polyisocyanatmischungen besitzen zweckmäßigerweise eine durchschnittliche Funktionalität von 2 bis 2,6, vorzugsweise 2 bis 2,4 und insbesondere 2 bis 2,2.

Sofern für spezielle Anwendungsgebiete Formkörper mit lichtbeständiger Oberfläche, wie z.B. für Automobilinnenauskleidungen oder Nackenstützen, gefordert werden, werden zu deren Herstellung bevorzugt aliphatische oder cycloaliphatische Polyisocyanate, insbesondere modifizierte Polyisocyanate auf der Grundlage von Hexamethylen-diisocyanat-1,6 oder Isophoron-diisocyanat oder Gemische der genannten Diisocyanate gegebenenfalls mit Diphenylmethan-diisocyanat- und/oder Toluylen-diisocyanat-Isomeren verwendet.

Als höhermolekulare Verbindungen b) mit mindestens zwei reaktiven Wasserstoffatomen werden zweckmäßigerweise solche mit einer Funktionalität von 2 bis 4, vorzugsweise 2 bis 3 und insbesondere 2,0 bis 2,6 und einem Molekulargewicht von 1200 bis 8500, vorzugsweise von 1800 bis 6000 und insbesondere 2000 bis 5000 verwendet. Besonders bewährt haben sich Polyole, ausgewählt aus der Gruppe der Polyether-polyole, Polyester-polyole, Polythioether-polyole, hydroxylgruppenhaltigen Polyesteramide, hydroxylgruppenhaltigen Polyacetale, hydroxylgruppenhaltigen aliphatischen Polycarbonate und polymermodifizierten Polyether-polyole oder Mischungen aus mindestens zwei der genannten Polyole. Insbesondere Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäuremono- und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole und Alkylenglykole sind:
Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. $\varepsilon$-Caprolacton oder Hydroxycarbonsäuren, z.B. $\omega$-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z. B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 3, insbesondere 2 bis 2,6 und ein Molekulargewicht von 1200 bis 3600, vorzugsweise 1500 bis 3000 und insbesondere 1800 bis 2500.

Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat, als Katalysatoren und unter Zusatz mindestens eines Startermoleküls das 2 bis 4, vorzugsweise 2 oder 3 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin und Trialkanolamine, wie z. B. Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan und Pentaerythrit.

Die Polyether-polyole, vorzugsweise Polyoxypropylen- und Polyoxypropylen-polyoxyethylen-polyole, besitzen eine Funktionalität von vorzugsweise 2 bis 3 und insbesondere 2,0 bis 2,6 und Molekulargewichte von 1800 bis 8500, vorzugsweise 2200 bis 6000 und insbesondere 2800 bis 4200 und geeignete Polyoxytetramethylen-glykole ein Molekulargewicht bis ungefähr 3500, vorzugsweise von 1200 bis 2200.

Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.Aminogruppen gebunden enthaltende Polyurethane und/oder Melamin und die z.B. beschrieben werden in der EP-B-011 752 (US 4 304 708), US-A-4 374 209 und DE-A-32 31 497.

Die Polyether-polyole können ebenso wie die Polyester-polyole einzeln oder in Form von Mischungen verwendet werden. Ferner können sie mit den polymermodifizierten Polyether-polyolen oder Polyester-polyolen sowie den hydroxylgruppenhaltigen Polyesteramiden, Polyacetalen und/oder Polycarbonaten gemischt werden.

Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Trioxyethylenglykol oder Tetraoxyethylenglykol mit Diarylcarbonaten, z.B. Diphenylcarbonat, oder Phosgen hergestellt werden können.

Zu den hydroxylgruppenhaltigen Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Die Urethangruppen enthaltenden, weichelastischen Formkörper mit verdichteter Randzone und zelligem Formkörperkern können ohne oder unter Mitverwendung von Kettenverlängerungs- und/oder Vernetzungsmitteln (c) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden niedermolekulare, mehrwertige Alkohole, vorzugsweise Diole und/oder Triole, mit Molekulargewichten kleiner als 480, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,3, Butandiol-1,4, Hexandiol-1,6 und Bis-(2-hydroxyethyl)-hydrochinon, Triole, wie 1,2,4-, 1,3,5-Trihydroxycyclohexan, Trimethylolethan, Glycerin und Trimethylolpropan und niedermolekulare hydroxylgruppenhaltige Polyalkylenoxide, z.B. mit Molekulargewichten bis 480, auf Basis Ethylen- und/oder 1,2-Propylenoxid und den vorgenannten Diolen und/oder Triolen als Startermoleküle.

Insbesondere Anwendung finden Ethylenglykol, Butandiol-1,3, Butandiol-1,4, Hexandiol-1,6 sowie Mischungen aus mindestens zwei der genannten Diole.

Sofern die Verbindungen der Komponente (c) mitverwendet werden, können diese in Form von Mischungen oder einzeln eingesetzt werden und werden vorteilhafterweise in Mengen von 1 bis 40 Gew.-Teilen, vorzugsweise von 5 bis 20 Gew.-Teilen, bezogen auf 100 Gew.-Teile der höhermolekularen Verbindungen (b), angewandt.

Die höhermolekularen Verbindungen mit mindestens 2 reaktiven Wasserstoffatomen (b) oder Mischungen aus (b) und niedermolekularen Kettenverlängerungs - und/oder Vernetzungsmitteln (c) zur Herstellung der weichelastischen Integral-PU-Schaumstoff-Formkörper besitzen eine Hydroxylzahl von kleiner als 300 mg KOH/g, vorzugsweise von kleiner als 280 mg KOH/g und insbesondere von 28 bis 200 mg KOH/g.

d) Als Treibmittel (d) findet vorzugsweise Wasser Verwendung, das mit den organischen, gegebenenfalls modifizierten Polyisocyanaten (a) unter Bildung von Kohlendioxid und Harnstoffgruppen reagiert und dadurch die Druckfestigkeit der Endprodukte beeinflußt. Da die in den erfindungsgemäß verwendbaren kristallinen, mikroporösen Molekularsieben aus Metalloxiden oder Metallphosphaten enthaltene Wassermenge meist ausreicht, bedarf es vielfach keiner separaten Wasserzugabe. Sofern jedoch der Polyurethan-Formulierung zusätzlich Wasser einverleibt werden muß zur Erzielung des gewünschten Raumgewichts, wird dieses üblicherweise in Mengen von 0,05 bis 5 Gew.%, vorzugsweise von 0,1 bis 3 Gew.% und insbesondere von 0,1 bis 1 Gew.%, bezogen auf das Gewicht der Aufbaukomponente (a) bis (c) verwendet.

Bei der Verwendung von calcinierten Molekularsieben ist der Zusatz von Wasser oder eines physikalisch wirkenden Treibmittels zwingend erforderlich.

Als Treibmittel (d) können anstelle von Wasser oder vorzugsweise in Kombination mit Wasser und den erfindungsgemäß geeigneten Molekularsieben aus Metalloxiden und Metallphosphaten auch niedrigsiedende Flüssigkeiten, die unter dem Einfluß der exothermen Polyadditionsreaktion verdampfen und vorteilhafterweise einen Siedepunkt unter Normaldruck im Bereich von -40 bis 120°C, vorzugsweise von 10 bis 90°C besitzen, oder Gase eingesetzt werden.

Die als Treibmittel geeigneten Flüssigkeiten der oben genannten Art und Gase können z.B. ausgewählt werden aus der Gruppe der Alkane wie z.B. Propan, n- und iso-Butan, n- und iso-Pentan und vorzugsweise der technischen Pentangemische, Cycloalkane wie z. B. Cyclobutan, Cyclopenten, Cyclohexen und vorzugsweise Cyclopentan und/oder Cyclohexan, Dialkylether, wie z. B. Dimethylether, Methylethylether oder Diethylether, Cycloalkylenether, wie z. B. Furan, Ketone, wie z. B. Aceton, Methylethylketon, Carbonsäureester, wie Ethylacetat und Methylformiat, Carbonsäuren wie Ameisensäure, Essigsäure und Propionsäure und Gase, wie z. B. Stickstoff, Kohlenmonoxid und Edelgase wie z. B. Helium, Neon und Krypton.

Die zweckmäßigste Menge an niedrigsiedender Flüssigkeit und Gase, die jeweils einzeln als Flüssigkeits- oder Gasmischungen oder als Gasflüssigkeitsgemische eingesetzt werden können, hängt ab von der Dichte, die man erreichen will und der eingesetzten Menge an Molekularsieben oder Molekularsieben und Wasser. Die erforderlichen Mengen können durch einfache Handversuche leicht ermittelt werden. Zufriedenstellende Ergebnisse liefern üblicherweise Flüssigkeitsmengen von 0,5 bis 210 Gew.-Teilen, vorzugsweise von 2 bis 10 Gew.-Teilen und Gasmengen von 0,01 bis 30 Gew.-Teilen, vorzugsweise von 2 bis 20 Gew.-Teilen, jeweils bezogen auf 100 Gew.-Teile der Komponente (b) und gegebenenfalls (c).

Als Treibmittel keine Anwendung finden, wie bereits ausgeführt wurde, Perfluorchlorkohlenwasserstoffe.

e) Als Katalysatoren (e) zur Herstellung der Formkörper mit einer verdichteten Randzone und einem zelligen Kern werden insbesondere Verbindungen verwendet, die die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z. B. Zinn-(II)-diacetat, Zinn-(II)-dioctoat, Zinn-(II)-diethylhexoat und Zinn-(II)-dilaurat und die Dialkylzinn-(IV)-salze von organischen Carbonsäuren, z. B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrabenzylamin, N-Methyl-, N-Ethyl-, N-Cyclohexylmorpholin, N,N,N',N'-Tetramethylethylendiamin, N,N,N'N'-Tetramethyl-butandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.

Insbesondere bei Verwendung eines Polyisocyanatüberschusses kommen als Katalysatoren ferner in Betracht: Tris-(dialkylaminoalkyl)-s-hexahydrotriazine, insbesondere Tris-(N,N-dimethylaminopropyl)s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination bezogen auf das Gewicht der Komponente (b).

f) Wesentliches Merkmal der vorliegenden Erfindung ist die Verwendung von kristallinen, mikroporösen Molekularsieben mit einem Durchmesser der Hohlräume und einer Zutrittsöffnung zu den Hohlräumen von kleiner als 1,3 nm, z.B. von kleiner als 1,3 nm bis 0,3 nm, vorzugsweise von 0,74 bis 0,41 nm, insbesondere von 0,7 bis 0,51 nm und insbesondere bevorzugt von 0,68 bis 0,51 nm aus Metalloxiden oder Metallphosphaten als Zusatzstoff (f). Die Zahlenwerte sind publiziert im "Atlas of Zeolite structure types" von W.M. Meier und D.H. Olson, Second Ploised Edition, Butterworths, London, 1987 (published on behalf of the Structure Commission of the International Zeolite Assoziation).

Kristalline, mikroporöse Molekularsiebe werden in zahlreichen Literatur- und Patentveröffentlichungen beschrieben. Zu Molekularsieben aus Metalloxiden gehören beispielsweise die Zeolithe, z.B. engporige, mittelporige und weitporige Zeolithe.

Zeolithe sind kristalline Aluminosilikate, die eine hochgeordnete Struktur mit einem starren dreidimensionalen Netzwerk von $SiO_4$- und $AlO_4$-Tetraedern besitzen, die durch gemeinsame Sauerstoffatome verbunden sind. Das Verhältnis der Silicium- und Aluminiumatome zu Sauerstoff beträgt 1:2.

Die Elektrovalenz der Aluminium enthaltenden Tetraeder ist durch den Einschluß von Kationen in den Kristall, z. B. eines Alkali- oder Wasserstoffions ausgeglichen. Ein Kationenaustausch ist möglich. Die Räume zwischen den Tetraedern sind vor der Dehydration durch Trocknen bzw. Calcinieren von Wassermolekülen besetzt. In den Zeolithen können anstelle von Aluminium auch andere Elemente, wie Bor, Eisen, Chrom, Antimon, Arsen, Gallium, Vanadium oder Beryllium in das Gitter eingebaut werden, oder das Silicum kann durch ein vierwertiges Element, wie Germanium, Titan, Zirkon und Hafnium ersetzt werden.

Als Metalloxide geeignet sind somit Mischoxide, die zweckmäßigerweise im wesentlichen bestehen aus Aluminium-Siliciumoxid, Bor-Siliciumoxid, Eisen-Siliciumoxid, Gallium-Siliciumoxid, Chrom-Siliciumoxid, Beryllium-Siliciumoxid, Vanadium-Siliciumoxid, Antimon-Siliciumoxid, Arsen-Siliciumoxid, Titan-Siliciumoxid, Aluminium-Germaniumoxid und Bor-Germaniumoxid sowie ein allein Siliciumdioxid enthaltendes Molekularsieb.

Entsprechend ihrer Struktur werden Zeolithe in verschiedene Gruppen unterteilt. So bilden bei der Mordenit-Gruppe Ketten oder bei der Chabasit-Gruppe Schichten aus Tetraedern die Zeolith-Struktur, während sich bei der Faujasit-Gruppe die Tetraeder zu Polyedern ordnen, z.B. in Form eines Kubooktaeders, der aus Vier- oder Sechsringen aufgebaut ist. Je nach der Verknüpfung der Kubooktaeder, wodurch unterschiedlich große Hohlräume entstehen, unterscheidet man zwischen Zeolithe vom Typ A, L, X oder Y. Zeolithe werden beispielsweise beschrieben in "Molecular Sieve Zeolites-I" Advances in Chemistry Series 101 (American Chemical Society, Washinton, D.C. 1971), Ullmanns Encyklopädie der technischen Chemie, 4. Auflage 1979, Band 17, Seiten 9 ff (Verlag Chemie-Weinheim-New York) und Chem. Rev. 1988, 88, 149-182.

Für das erfindungsgemäße Verfahren geeignete Zeolithe besitzen ein $SiO_2/Al_2O_3$-Verhältnis von gleich oder größer 4, vorzugsweise gleich oder größer als 6 und insbesondere gleich oder größer als 10. In Betracht kommen beispielsweise engporige Zeolithe wie ZK-5, Erionit, Chabazit, mittelporige Zeolithe wie Pentasilzeolithe, Theta I, Theata 2 und EU-1-Zeolith und weitporige Zeolithe wie X-Zeolith, Y-Zeolith, Mordenit, Offretit, Beta-Zeolith, Omega-Zeolith, L-Zeolith und Faujasit (Angewandte Chemie 100 (1988), 232-251).

Zu dieser Gruppe von Zeolithen gehören auch die sogenannten ultrastabilen Zeolithe, z.B. des Faujasit-Typs, das sind dealuminierte Y-Zeolithe, deren Herstellung z.B. in der US-A-4 512 961 beschrieben wird oder ultrastabiler Mordenit (H.K. Beyer und I. Belenykaja, Catalysis by Zeolites, Studies in Surface Science and Catalysis 5 (1980), Seiten 203 bis 209 und I.M. Newsam, Science, Vol. 231 (1986), Seite 1094).

Für das erfindungsgemäße Verfahren bevorzugt verwendbar sind auch die mittelporigen Pentasilzeolithe. Diese haben als Grundbaustein einen aus $SiO_4$-Tetraedern aufgebauten Fünfring gemeinsam und besitzen ein sehr hohes $SiO_2/Al_2O_3$-Verhältnis (G.T. Kokotailo und W.M. Meier, Spec. Publ. Chem. Soc. 33 (1980), Seite 133).

Da derartige Zeolithe eine unterschiedliche Zusammensetzung aufweisen können, spricht man von isomorph substituierten Zeolithen. Es handelt sich hierbei um Aluminium-, Bor-, Eisen-, Chrom-, Antimon-, Arsen-, Gallium-, Germanium-, Titan-, Beryllium- und Wismutsilikatzeolithe oder deren Gemische sowie um Aluminium-, Bor-, Gallium- und Eisengermanatzeolithe oder deren Gemische (M. Thielen et al., Proceedings of Inf. Symp. on Zeolite Catalysis ZEOCAT Symp., Siofok, Hungary, May 13-16, 1985, Seiten 1 bis 19).

Sehr gut bewährt haben sich und daher vorzugsweise verwendet werden Aluminium-, Bor-, Gallium- oder Eisensilikatzeolithe des Pentasiltyps mit einem ellipsoiden Hohlraumdurchmesser von ungefähr 0,56 nm x 0,53 nm und 0,55 nm x 0,51 nm (I.M. Newsam, Science, Vol. 231 (1986), Seite 1095). Der insbesondere geeignete Aluminosilikatzeolith kann z.B. aus einer Aluminiumverbindung, vorzugsweise Aluminiumhydroxid oder Aluminiumsulfat und einer Siliciumverbindung, vorzugsweise hochdispersem Siliciumdioxid in einer wäßrigen Aminlösung, insbesondere in Polyaminlösungen, wie z.B. 1,6-Hexandiamin-, 1,3-Propandiamin- oder Triethylentetraminlösungen mit oder ohne Zusatz von basischen Alkali- oder Erdalkalisalzen bei 100 bis 220°C unter autogenem Druck hergestellt werden. Zu dieser Gruppe gehören auch kristalline isotaktische Zeolithe, wie sie in der DE-A-30 06 471 (US-A-44 01 637) beschrieben werden. Die erfindungsgemäß geeigneten Aluminosilikatzeolithe enthalten je nach Wahl der Einsatzstoffmengen ein $SiO_2/Al_2O_3$-Verhältnis von 10 bis 40 000, vorzugsweise von 30 bis 20 000. Derartige Aluminosilikatzeolithe können auch in einem etherischem Medium, wie Diethylenglykoldimethylether, in einem alkoholischen Medium, wie z.B. Methanol oder 1,4-Butandiol oder in Wasser synthetisiert werden. Erfindungsgemäß verwendbare Borosilikatzeolithe können z.B. bei Temperaturen von 9 bis 200°C unter autogenem Druck durch Umsetzung einer Borverbindung, beispielsweise $H_3BO_3$, mit einer Siliciumverbindung, vorzugsweise hochdispersem Siliciumdioxid, in einer wäßrigen Aminlösung, insbesondere einer wäßrigen 1,6-Hexandiamin-, 1,3-Propandiamin- oder Triethylentetraminlösung in Gegenwart oder Abwesenheit eines basischen Alkali- oder Erdalkalisalzes synthetisiert werden, wobei anstelle der wäßrigen Aminlösungen auch etherische Lösungen, wie z.B. Diethylenglykoldimethyletherlösungen oder alkoholische Lösungen wie z.B. 1,6-Hexandiollösungen, Anwendung finden können. In analoger Weise können auch die erfindungsgemäß geeigneten Eisensilikatzeolithe unter Verwendung von Eisenverbindungen, wie z.B. Eisen(III)sulfat, hergestellt werden.

Zu den erfindungsgemäß verwendbaren siliciumreichen Zeolithen, das heißt Zeolithen mit einem $SiO_2/Al_2O_3$-Verhältnis von gleich oder größer 4, vorzugsweise gleich oder größer als 6 und insbesondere gleich oder größer als 10 gehören auch die folgenden Typen: ZSM-5, ein kristalliner Aluminosilikatzeolith mit einem $SiO_2/Al_2O_3$-Verhältnis größer als 10 und ellipsoiden Hohlraumdurchmessern von 0,56 x 0,53 nm und 0,55 x 0,51 nm, dessen Herstellung z.B. in der DE-B-17 92 783 (US 3,702,886) beschrieben wird.

ZSM-8, ein kristalliner Zeolith, dessen Kenndaten und ein Verfahren zu seiner Herstellung in der GB-A-1 334 243 publiziert werden.

ZSM-11 ist ebenfalls ein kristalliner Aluminosilikatzeolith. Seine Kenndaten und Herstellung werden in der US-A-3 709 979 beschrieben.

ZSM-12 ist ein kristalliner Aluminosilikatzeolith, dessen Struktur und Herstellungsweise aus der US 3,832,449 oder Zeolites 5 (1985) 346 bekannt ist.

ZSM-21 ist ein kristalliner Aluminosilikatzeolith, dessen Kenndaten und seine Herstellung in der US-A-4,046,859 beschrieben wird.

ZSM-22, ein kristalliner Zeolith, der bekannt ist aus den Publikationen von G.T. Kokotailo et al., Zeolites 5 (1985), Seite 349 und A. Araya et al. Zeolites 4 (1984), Seite 280.

ZSM-23, ein kristalliner Aluminosilikatzeolith, wird in der US 4.076 842 beschrieben;

ZSM-25, ein kristalliner Aluminosilikatzeolith mit 6 bis 10 $SiO_2$ pro $Al_2O_3$, der bekannt ist aus der US 4,247,416.

ZSM-34, ein kristalliner Aluminosilikatzeolith, dessen Kenndaten und Herstellung in der US 4,086,186 offenbart werden,

ZSM-35, ein kristalliner Aluminosilikatzeolith, dessen Herstellungsweise in der US 4,016,245 und US 4,107,195 beschrieben wird,

ZSM-38, ein kristalliner Aluminosilikatzeolith, der bekannt ist aus US 4 046 859,

ZSM-48, ein kristalliner Aluminosilikatzeolith, der in der US 4,448,675 und US 4 397 827 beschrieben wird und

ZSM-50, ein kristalliner Aluminosilikatzeolith, der aus der US 4 537 754 bekannt ist.

Erfindungsgemäß verwendbar sind ferner Ferrierit, ein kristalliner Aluminosilikatzeolith mit einem $SiO_2/Al_2O_3$-Verhältnis von gleich und größer als 10 und einem ellipsoiden Hohlraumdurchmesser von 0,54 x 0,42 nm, dessen Herstellungsweise in der EP-A-012 473 beschrieben wird und vorzugsweise Silicalite, kristalline Siliciumdioxide, deren Kenndaten und ein Verfahren zur Herstellung z.B. in der DE-B-2 751 443 (US 4,061,724) sowie den EP-A-64 372, EP-A-93 476 und EP-A-123 060 beschrieben werden. Diese Silicalite besitzen Pentasilstruktur.

Als Metalloxid in Betracht kommen ferner Titansilikate mit Pentasilstruktur, wie z.B. TS-1, die z.B. beschrieben werden von B. Kraushaar und J.H.C. van Hooff (Catalysis Letters 1 (1988), Seiten 81-84) oder G. Perego et al. (Stud. Surf. Sci. Catalysis 28 (1986), Seiten 129-136) und ETS-Molekularsiebe, wie z.B. ETS-1, ETS-4 und ETS-10. Geeignete ETS-Molekularsiebe sind z.B. bekannt aus US-A-4 853 202 und ZA 88 09 457.

Die erfindungsgemäß verwendbaren Alumino-, Boro-, Gallium-, Titan- und Eisensilikatzeolithe können nach ihrer Isolierung bei 100 bis 160°C, vorzugsweise ungefähr 110°C getrocknet und bei 450 bis 500°C, vorzugsweise ungefähr 500°C calciniert werden.

Liegen die Zeolithe aufgrund des angewandten Herstellungsverfahrens nicht in der aciden H-Form, sondern in der Salzform, beispielsweise der Na-Form oder K-Form vor, so kann diese durch einen Jonenaustausch, z.B. mit Ammoniumionen, und anschließende Calcinierung oder Behandlung mit Säuren partiell oder vollständig in die gewünschte H-Form übergeführt werden. Für das erfindungsgemäße Verfahren finden als Metalloxide insbesondere Zeolithe Verwendung, die in der H-Form oder Ammoniumform vorliegen. Die Zeolithe können ferner mit Übergangsmetallen, wie z.B. Eisen, Mangan, Kobalt, Wolfram oder Molybdän, Edelmetallen, wie z.B. Kupfer oder Silber und seltenen Erdmetallen wie z.B. Lanthan oder Cer dotiert oder mit Mineralsäuren wie z.B. Schwefelsäure, Phosphorsäure oder Flußsäure behandelt werden.

Als Metalloxide Anwendung finden insbesondere Mordenit in der H-Form, Na-Form oder Ammoniumform, zweckmäßigerweise mit einem Hohlraumdurchmesser von 0,65 x 0,7 nm, Offretit in der K-, Na-Form, Ammoniumform oder H-Form, zweckmäßigerweise mit einem Hohlraumdurchmesser von 0,68 x 0,67 nm, Zeolith ZSM-5 in der H-Form, Na-Form oder Ammoniumform mit einem Hohlraumdurchmesser von 0,53 x 0,56 und 0,55 x 0,51 nm, ZSM 11 in der Na-Form oder Ammoniumform mit einem Hohlraumdurchmesser von 0,54 x 0,53 nm, Zeolith ZSM-12 mit einem Hohlraumdurchmesser von 0,62 x 0,57 x 0,55 nm und der allgemeinen Formel

$$Na_x\left[(SiO_2)_{28-x}\ (AlO_2)_x\right] \cdot y\ H_2O\ ,$$

wobei X < 2,5 und y < 4 sind und mit der Maßgabe, daß der Zeolith auch in der H-Form vorliegen kann, Clinopthilolith, Ferrierit, ultrastabiler Y-Zeolith, ultrastabiler Mordenit in der H-Form oder Na-Form oder Silicalite sowie Mischungen aus mindestens 2 der genannten Zeolithe. Die Hohlraumdurchmesser werden z.B. beschrieben von I.M. Newsam in Science, Vol 231 (1986), Seite 1095 sowie im Atlas of Zeolite Structure Types von W.M. Meier und D.H. Olson (Second Ploised Edition, Butterworths, London 1987).

Als Zusatzstoff (f) kommen ferner kristalline, mikroporöse Molekularsiebe mit einem Durchmesser der Hohlräume und einer Zutrittsöffnung zu den Hohlräumen von kleiner als 1,3 nm aus Metallphosphaten in Betracht. Vorzugsweise Anwendung finden substituierte oder unsubstituierte Aluminium- oder Siliciumaluminiumphosphate. Die Aluminium- oder Siliciumaluminiumphosphate können zusätzlich die Elemente Lithium, Beryllium, Bor, Magnesium, Gallium, Germanium, Arsen, Titan, Mangan, Eisen, Kobalt oder Zink enthalten. Geeignet sind ferner z.B. Siliciumeisenaluminiumphosphate, Kobaltaluminiumphosphate, Kobaltsiliciumaluminiumphosphate oder Mischungen derartiger Phosphate. Als Zusatzstoff (f) geeignete Metallphosphate der genannten Art werden z.B. beschrieben von E. Flanigan in Pure and Applied Chemistry, Vol. 58 (1986), Nr. 10, Seiten 1351 bis 1358, von I.M. Bennett et al. in Stud. Surf. Sci Catalysis 37 (1988), Seite 269, von P.I. Grobet et al. Studies in Surface Science und Catalysis, Vol 37 (1988), Seiten 13 bis 27 und in den EP-A-158 977, EP-A-161 489, EP-A-161 490 und EP-A-251 168.

Als Aluminiumphosphate eignen sich insbesondere die unter hydrothermalen Bedingungen synthetisierten Produkte. In Betracht kommen beispielsweise Aluminiumphosphate wie $AlPO_4$-5, $AlPO_4$-9, $AlPO_4$-11, $AlPO_4$-12, $AlPO_4$-14, $AlPO_4$-21, $AlPO_4$-25, $AlPO_4$-31, $AlPO_4$-33, $AlPO_4$-37, $AlPO_4$-40, $AlPO_4$-46, $AlPO_4$-54, VPI-5, dessen Hohlraum von 18 Tetraedern gebildet wird und einen Durchmesser von 0,12 nm besitzt und MCM-9. Die Herstellung der Produkte wird beschrieben in EP-A-132 708, US-A-4 310 440 und US-A-4 473 663.

Zur Herstellung von beispielsweise $AlPO_4$-5 wird Orthophosphorsäure mit Pseudoboehmit (Catapal SB®) in Wasser homogen gemischt, zu dieser Mischung fügt man Tetrapropylammoniumhydroxid und läßt das Gemisch bei ungefähr 150°C unter autogenem Druck 20 bis 60 Stunden in einem Autoklaven reagieren. Das gebildete $AlPO_4$ wird danach abfiltriert, bei 100 bis 160°C getrocknet und bei 450 bis 500°C calciniert.

$AlPO_4$-9 wird ebenfalls aus Orthophosphorsäure und Pseudoboehmit, aber in einer wäßrigen 1,4-Diazabicyclo-2,2,2-octanlösung, bei ungefähr 200°C unter autogenem Druck in einem Zeitraum von 200 bis 400 Stunden synthetisiert. Verwendet man anstelle von 1,4-Diazabicyclo-2,2,2-octan Ethylendiamin, so erhält man $AlPO_4$-12. In analoger Weise erhält man in Gegenwart einer wäßrigen Pyrrolidonlösung $AlPO_4$-21.

Als geeignete Siliciumaluminiumphosphate kommen, insbesondere die unter hydrothermalen Bedingungen synthetisierten Produkte, SAPO-5, SAPO-11, SAPO-20, SAPO-31, SAPO-34, SAPO-37, SAPO-41 und SAPO-46 in Betracht.

Die Strukturen und die Zusammensetzungen der AlPD$_4$'s und SAPO's werden teilweise beschrieben im "Atlas of zeolite structure types" von W.M. Meier und D.H. Olson.

Derartige Siliciumaluminiumphosphate können beispielsweise hergestellt werden durch Umsetzung von Silicium-, Aluminium- und Phosphorverbindungen in einer wäßrigen aminoorganischen Lösung und Auskristallisieren lassen bei 100 bis 250°C unter autogenem Druck in einem Zeitraum von ungefähr 2 Stunden bis ungefähr 2 Wochen.

Beispielsweise kann SAPO-5 gemäß EP-A-251 168 hergestellt werden durch Vermischen einer Suspension von Siliciumdioxid in einer wäßrigen Tetrapropylammoniumhydroxidlösung mit einer wäßrigen Suspension aus Pseudoboehmit und Orthophosphorsäure und anschließend Umsetzung bei 150 bis 200°C in 20 bis 200 Stunden unter autogenem Druck in einem Rührautoklaven. Die Trocknung des auskristallisierten und abfiltrierten Siliciumaluminiumphosphats erfolgt bei 110 bis 160°C und die Calcination bei 450 bis 550°C.

Als Siliciumaluminiumphosphate verwendbar sind auch ZYT-5, ZYT-6, ZYT-7, ZYT-9, ZYT-11 und ZYT-12 nach J 59 217-619 sowie ELAPO, ELAPSO, MeAPO und MeAPSO. Die letztgenannten Molekularsiebe werden z.B. beschrieben von E.M. Flanigen et. al. in "Aluminophosphate Molecular Sieves and the Periodic Table" (Union Carbide Molecular Sieves, 1987).

Als Metallphosphate insbesondere Verwendung finden Aluminiumphosphate mit AlPO$_4$-Struktur VPI-5 und MCM-9.

Zur Herstellung der Fluorchlorkohlenwasserstoff freien Urethangruppen enthaltenden, weichelastischen Formkörper werden die erfindungsgemäß verwendbaren Molekularsiebe zweckmäßigerweise in einer Menge von 1 bis 50 Gew. %, vorzugsweise von 2 bis 20 Gew.% und insbesondere 3 bis 14 Gew.%, bezogen auf das Gewicht der Komponenten (b) und gegebenenfalls (c), verwendet.

Die erfindungsgemäß als Zusatzstoffe (f) verwendeten kristallinen, mikroporösen Molekularsiebe mit einem Durchmesser der Hohlräume von kleiner als 1,3 nm aus Metalloxiden oder Metallphosphaten besitzen zweckmäßigerweise eine Korngröße von 0,5 bis 200 μm, vorzugsweise von 0,8 bis 20 μ und insbesondere 1 bis 2 μm.

Zur Erzielung einer verbesserten Wirksamkeit hat es sich als vorteilhaft erwiesen, die Zusatzstoffe (f) in Form eines Konzentrats, das besteht aus mindestens einem kristallinen, mikroporösen Molekularsieb mit einem Durchmesser der Hohlräume von kleiner als 1,3 nm bis 0,3 nm aus Metalloxiden oder Metallphosphaten und mindestens einer höhermolekularen Verbindung mit mindestens zwei reaktiven Wasserstoffatomen (b), zu verwenden und dieses Konzentrat z.B. mittels eines Dreiwalzenstuhls herzustellen. In Form des Konzentrats können die erfindungsgemäß verwendbaren kristallinen, mikroporösen Molekularsiebe auf einfache Weise in der sogenannten A-Komponente fein verteilt werden, wodurch die Sedimentationsneigung deutlich vermindert wird.

g) Zusätzlich zu den erfindungswesentlichen kristallinen, mikroporösen Molekularsieben können zur Herstellung der Urethangruppen enthaltenden, weichelastischen Formkörper mit einem zelligen Kern, einer verdichteten Randzone und einer im wesentlichen porenfreien, glatten Oberfläche gegebenenfalls auch noch andere Zusatzstoffe (f) und gegebenenfalls Hilfsmittel (g) mitverwendet werden. Als andere Zusatzstoffe (f) und Hilfsmittel (g) genannt seien beispielsweise oberflächenaktive Substanzen, Schaumstabilisatoren, Zellregler, Gleitmittel, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Gleitmittel hat sich der Zusatz eines Ricinolsäurepolyesters mit einem Molekulargewicht von 1500 bis 3500, vorzugsweise von 2000 bis 3000 besonders bewährt, der zweckmäßigerweise in einer Menge von 0,5 bis 10 Gew.-%, vorzugsweise 5 bis 8 Gew.-%, bezogen auf das Gewicht der Komponente (b) oder der Komponenten (b) und (c) eingesetzt wird.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.-%, bezogen auf das Gewicht der Komponenten (a) bis (c), einverleibt.

Geeignete Flammschutzmittel sind beispielsweise Trikresylphosphat, Tris-(-2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Blähgraphit, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Blähgraphit und Ammoniumpolyphosphat, Ammoniumpolyphosphaten und Melamin sowie gegebenenfalls Stärke zum Flammfestmachen der erfindungsgemäß hergestellten Formkörper verwendet werden. Im allgemeinen hat es sich als zweckmäßig erwiesen, 2 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der Formkörper werden die organischen, gegebenenfalls modifizierten Polyisocyanate (a), höhermolekularen Verbindungen mit mindestens zwei reaktiven Wasserstoffatomen (b) und gegebenenfalls niedermolekularen Kettenverlängerungs- und/oder Vernetzungsmittel in solchen Mengen zur Umsetzung gebracht, daß das Äquivalenz-Verhältnis von NCO-Gruppen der Polyisocanate (a) zur Summe der reaktiven Wasserstoffatome der Komponenten (b) und gegebenenfalls (c) 0,85 bis 1,50:1, vorzugsweise 0,95 bis 1,15:1 und insbesondere 0,9 bis 1,1:1 beträgt.

Die erfindungsgemäßen Urethangruppen enthaltenden, weichelastischen Formkörper können nach dem Prepolymer oder vorzugsweise nach dem one shot-Verfahren mit Hilfe der Niederdruck-Technik oder der Hochdrucktechnik in geschlossenen, zweckmäßigerweise temperierbaren Formwerkzeugen, beispielsweise metallischen Formwerkzeugen, z.B. aus Aluminium, Gußeisen oder Stahl, oder Formwerkzeugen aus faserverstärkten Polyester- oder Epoxidformmassen hergestellt werden. Aufgrund der guten Fließfähigkeit und verbesserten Verarbeitbarkeit der Formulierungen werden die Formkörper jedoch insbesondere mittels der Reaktionsspritzgußtechnik (RIM-Technik) hergestellt. Diese Verfahrensweisen werden beispielsweise beschrieben von Piechota und Röhr in "Integralschaumstoff", Carl-Hanser-Verlag, München, Wien 1975; D.J. Prepelka und J.L. Wharton in Journal of Cellular Plastics, März/April 1975, Seiten 87 bis 98, U. Knipp in Journal of Cellular Plastics, März/April 1973, Seiten 76 bis 84 und im Kunststoff-Handbuch, Band 7, Polyurethane, 2. Auflage, 1983, Seiten 333 ff.

Als besonders vorteilhaft hat es sich erwiesen, nach dem Zweikomponenten-Verfahren zu arbeiten und die Aufbaukomponenten (b), (d), (e), (f) und gegebenenfalls (c) und (g) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden bei einer Temperatur von 15 bis 80°C, vorzugsweise von 25 bis 55°C gemischt und gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 120°C, vorzugsweise 30 bis 80°C und insbesondere 45 bis 60°C. Die Verdichtungsgrade liegen im Bereich von 1,2 bis 8,3, vorzugsweise von 2 bis 7 und insbesondere von 2,4 bis 4,5.

Die Menge des in das Formwerkzeug eingebrachten Reaktionsgemisches wird vorteilhafterweise so bemessen, daß die erhaltenen Formkörper eine Gesamtdichte von 0,1 bis 0,9 g/cm$^3$, vorzugsweise von 0,3 bis 0,7 g/cm$^3$ besitzen.

Die nach dem erfindungsgemäßen Verfahren hergestellten Urethangruppen enthaltenden, weichelastischen Formkörper mit einem zelligen Kern, einer verdichteten Randzone, und einer im wesentlichen porenfreien, glatten Oberfläche finden beispielsweise Verwendung in der Kraftfahrzeugindustrie, z.B. als Armlehnen, Kopfstützen und Sicherheitsverkleidungen im Kraftfahrzeuginnenraum, sowie als Fahrrad- oder Motorradsattel. Sie eignen sich ferner als Schuhsohlen sowie als Innenschuh für Skistiefel. Insbesondere Anwendung finden sie zum Ummanteln von metallischen Behältern, vorzugsweise Metallfässern, für alkoholische und alkoholfreie Getränke, wie z.B. Bier, Fruchtsäfte u.a.

Beispiel 1

A-Komponente: Mischung, bestehend aus

```
56,25    Gew.-Teilen eines mit Glycerin gestarteten Polyoxypropylen
         (86,5 Gew.-%)-polyoxyethylen (13,5 Gew.-%)-polyols mit der
         OH-Zahl 35,
10,40    Gew.-Teilen eines mit Glycerin gestarteten Polyoxypropylen
         (81,5 Gew.-%)-polyoxyethylen-(18,5 Gew.-%)-polyols mit der
         OH-Zahl 29,
19,80    Gew.-Teilen eines mit Ethylendiamin gestarteten Polyoxypropylen-
         polyols mit der OH-Zahl 768,
 1,0     Gew.-Teilen einer 33 gew.-%igen Lösung von Triethylendiamin in
         Dipropylenglykol,
```

```
 0,05    Gew.-Teilen eines Schaumstabilisators auf Silikonbasis
         (Stabilisator OS 50 der Bayer AG),
 0,1     Gew.-Teilen eines Dispergiermittels (Isol® 4R002 der Firma ISL
         Chemie, Köln),
 9,9     Gew.-Teilen eines Mordenits, der in der H-Form vorlag
```

$\text{(Zeolon® 900H), die chemische Zusammensetzung}$
$H_x[(SiO_2)_{48-x}(AlO_2)_x] \cdot y\ H_2O$ besaß, wobei die Werte $x$ gleich 3 bis 9 und $y$ kleiner als 24 waren, und der ellipsoidische Hohlraumdurchmesser von 0,65 nm x 0,7 nm besaß,

```
 2,0     Gew.-Teilen einer Pigmentpaste (Isopur® braun SA 01130/8311 der
         Firma ISL-Chemie, Köln) und
 0,5     Gew.-Teilen Wasser.
```

B-Komponente:

Urethangruppen enthaltendes Quasiprepolymer mit einem NCO-Gehalt von 28 Gew.-%, hergestellt durch Umsetzung einer Mischung aus 55 Gew.-Teilen 4,4'-Diphenylmethan-diisocyanat und 45 Gew.-Teilen einer Mischung aus Diphenylmethan-diisocyanaten und Polyphenyl-polymethylen-polyisocyanaten mit 9 Gew.-Teilen eines Polyoxypropylenglykols mit einer Hydroxylzahl von 250.

100 Gew.-Teile der A-Komponente und 50 Gew.-Teile der B-Komponente wurden bei 22°C nach dem Reaktionsspritzgußverfahren auf einer Hochdruckdosieranlage vom Typ Puromat® 80/40 der Firma Elastogran Polyurethane GmbH, Geschäftsbereich Maschinenbau, 8021 Straßlach, gemischt und in ein auf 40°C temperiertes metallisches Formwerkzeug mit den inneren Abmessungen 200x200x40 mm in einer solchen Menge eingebracht, daß sich nach dem Verschließen des Formwerkzeugs ein Verdichtungsgrad von 3,9 einstellte.

Der Formkörper wurde nach 3,5 Minuten entformt. Man erhielt eine weichelastische Polyurethanplatte mit einem zelligen Kern, einer verdichteten Randzone und einer porenfreien Oberfläche.

Wurde die Reaktionsmischung in einem offenen Formwerkzeug aufschäumen gelassen, so erhielt man einen Schaumkörper mit der Gesamtdichte von 184 g/Liter (0,184 g/cm$^3$). Hierbei gemessen wurden eine Startzeit von 30 Sekunden und eine Steigzeit von 85 Sekunden.

Vergleichsbeispiel I

A-Komponente: Mischung, bestehend aus

| | |
|---|---|
| 56,85 | Gew.-Teilen eines mit Glycerin gestarteten Polyoxypropylen (86,5 Gew.-%)-polyyoxyethylen (13,5 Gew.-%)-polyols mit der OH-Zahl 35, |
| 10,50 | Gew.-Teilen eines mit Glycerin gestarteten Polyoxypropylen (81,5 Gew.-%)-polyoxyethylen-(18,5 Gew.-%)-polyols mit der OH-Zahl 29, |
| 20,00 | Gew.-Teilen eines mit Ethylendiamin gestarteten Polyoxypropylenpolyols mit der OH-zahl 768, |
| 1,0 | Gew.-Teilen einer 33 gew.-%igen Lösung von Triethylendiamin in Dipropylenglykol, |
| 0,05 | Gew.-Teilen eines Schaumstabilisators auf Silikonbasis (Stabilisator OS 50 der Bayer AG), |
| 0,1 | Gew.-Teilen eines Dispergiermittels (Isol® 4R002 der Firma ISL Chemie, Köln), |
| 9,5 | Gew.-Teilen Trichlorfluormethan und |
| 2,0 | Gew.-Teilen einer Pigmentpaste (Isopur® braun SA 01130/8311 der Firma ISL-Chemie, Köln). |

B-Komponente: analog Beispiel 1

100 Gew.-Teile der A-Komponente und 50 Gew.-Teile der B-Komponente wurden analog den Angaben des Beispiels 1 in demselben Formwerkzeug, jedoch bei einem Verdichtungsgrad von 3,6 aufschäumen gelassen.

Der Formkörper wurde nach 4 Minuten entformt. Man erhielt eine weichelastische Polyurethanplatte mit einem zelligen Kern, einer verdichteten Randzone und einer kompakten, porenfreien Oberfläche, die eine Shore-A-Härte von 98 besaß.

Beim Verschäumen der Reaktionsmischung in einem offenen Formwerkzeug erhielt man einen Schaumstoffkörper mit einer Gesamtdichte von 185 g/Liter (0,185 g/cm$^3$). Hierbei gemessen wurden eine Startzeit von 30 Sekunden und eine Steigzeit von 92 Sekunden.

Die Integralschaumstoff-Formkörper, -Formkörper, hergestellt nach dem Beispiel 1 und Vergleichsbeispiel I, besitzen eine hohe Stoßelastizität und finden z.B. Verwendung zum Ummanteln von Aluminiumfässern in der Getränkeindustrie, insbesondere zum Ummanteln von Bierfässern.

Beispiel 2

A-Komponente: Mischung, bestehend aus

| | |
|---|---|
| 56,90 | Gew.-Teilen eines mit Glycerin gestarteten Polyoxypropylen (81,5 Gew.-%)-polyoxyethylen (18,5 Gew.-%)-polyols mit einer Hydroxylzahl von 29, |
| 25,45 | Gew.-Teilen eines Pfropf-polyether-polyols mit einer Hydroxylzahl von 28, hergestellt aus einem mit Glycerin gestarteten Polyoxypropylen-polyoxyethylen-polyol als Pfropfgrundlage und einer Mischung aus Styrol und Acrylnitril im Gewichtsverhältnis 12:8 als Pfropfauflage (Polyurax ® U26-03 der Firma BP, Deutschland) |
| 6,50 | Gew.-Teilen Ethylenglykol, |
| 1,20 | Gew.-Teilen einer 25 gew.-%igen Lösung von Triethylendiamin in 1.4-Butandiol, |
| 0,10 | Gew.-Teilen einer 33 gew.-%igen Lösung von Triethylendiamin in Ethylenglykol, |
| 0,95 | Gew.-Teilen Wasser und |
| 8,90 | Gew.-Teilen eines Mordenits in der H-Form (Zeolon ® 900H der Firma Norton, USA) |

B-Komponente: analog Beispiel 1

100 Gew.-Teile der A-Komponente und 45 Gew.-Teile der B-Komponente wurden analog den Angaben des Beispiels 1 zur Reaktion gebracht, jedoch bei einem Verdichtungsgrad von 2,4 aufschäumen gelassen.

Der Formkörper wurde nach 4 Minuten entformt. Man erhielt eine weichelastische Polyurethanplatte mit einem zelligen Kern, einer verdichteten Randzone und einer kompakten, porenfreien Oberfläche, die eine Shore-A-Härte von 65 besaß.

Wurde die Reaktionsmischung in einem offenen Formwerkzeug aufschäumen gelassen, so erhielt man einen Schaumstoffkörper mit einer Gesamtdichte von 167 g/Liter (0,167 g/cm$^3$). Hierbei gemessen wurden eine Startzeit von 22 Sekunden und eine Steigzeit von 65 Sekunden.

Vergleichsbeispiel II

A-Komponente: Mischung, bestehend aus

| | |
|---|---|
| 56,70 | Gew.-Teilen eines mit Glycerin gestarteten Polyoxypropylen (81,5 Gew.-%)-polyoxyethylen (18,5 Gew.-%)-polyols mit einer Hydroxylzahl von 29, |
| 22,97 | Gew.-Teilen eines Pfropf-polyether-polyols mit einer Hydroxylzahl von 28, hergestellt aus einem mit Glycerin gestarteten Polyoxypropylen-polyoxyethylen-polyol als Pfropfgrundlage und einer Mischung aus Styrol und Acrylnitril im Gewichtsverhältnis 12:8 als Pfropfauflage (Polyurax ® U26-03 der Firma BP, Deutschland) |
| 6,40 | Gew.-Teilen Ethylenglykol, |
| 1,13 | Gew.-Teilen einer 25 gew.-%igen Lösung von Triethylendiamin in 1.4-Butandiol, |
| 0,10 | Gew.-Teilen einer 33 gew.-%igen Lösung von Triethylendiamin in Ethylenglykol, |
| 0,20 | Gew.-Teilen eines Dispergiermittels (Isol ® HR 002 der Firma ISL-Chemie, Köln) und |
| 12,5 | Gew.-Teilen Trichlorfluormethan. |

B-Komponente: Analog Beispiel 1

100 Gew.-Teile der A-Komponente und 45 Gew.-Teile der B-Komponente wurden analog den Angaben des Beispiels 1 umgesetzt und in demselben Formwerkzeug, jedoch bei einem Verdichtungsgrad von 3,2 aufschäumen gelassen.

Der Formkörper wurde nach 4 Minuten entformt. Man erhielt eine weichelastische Polyurethanplatte mit einem zelligen Kern, einer verdichteten Randzone und einer kompakten, porenfreien Oberfläche, die eine Shore-A-Härte von 70 besaß.

Wurde die Reaktionsmischung in einem offenen Formwerkzeug aufschäumen gelassen, so erhielt man einen Schaumstoffkörper mit einer Gesamtdichte von 125 g/Liter (0,125 g/cm$^3$). Hierbei gemessen wurden eine Startzeit von 20 Sekunden und eine Steigzeit von 65 Sekunden.

Die nach Angaben des Beispiels 2 und des Vergleichsbeispiels II hergestellten weichelastischen Integralschaumstoff-Formkörper besitzen vorzugsweise eine Gesamtdichte von 300 (0,3) bis 700 g/Liter (0,7 g/cm$^3$) und eine Shore-A-Härte von 40 bis 80. Die Produkte finden beispielsweise Verwendung in der Automobil-, Möbel-, Sport- und Freizeitindustrie z.B. als Armlehnen, Nackenstützen, Lenkräder, Sitzpolster, Puppenkörper, Haltegriffe und Verkleidungselemente.

Beispiel 3

A-Komponente: Mischung, bestehend aus

| | |
|---|---|
| 47,10 | Gew.-Teilen eines mit Glycerin gestarteten Polyoxypropylen (81,5 Gew.-%)-polyoxyethylen (18,5 Gew.-%)-polyols mit einer Hydroxylzahl von 29, |
| 14,50 | Gew.-Teilen eines mit Trimethylolpropan gestarteten Polyoxypropylen (80 Gew.-%)-polyoxyethylen (20 Gew.-%)-polyols mit einer Hydroxylzahl von 27, |
| 18,10 | Gew.-Teilen eines mit-Glycerin gestarteten Polyoxypropylen (86,5 Gew.-%)-polyoxyethylen (13,5 Gew.-%)-polyols mit einer Hydroxylzahl von 35, |
| 9,95 | Gew.-Teilen Butandiol-1,4, |
| 1,23 | Gew.-Teilen einer 25 gew.-%igen Lösung von Triethylendiamin in Butandiol-1,4, |
| 0,02 | Gew.-Teilen Dibutylzinndilaurat und |
| 9,10 | Gew.-Teilen eines Mordenits in der H-Form (Zeolon ® 900 H der Firma Norton, USA) |

B-Komponente:

Urethangruppen enthaltendes Quasiprepolymer mit einem NCO-Gehalt von 23 Gew.-%, hergestellt durch Umsetzung von 4,4'-Diphenylmethan-diisocynat mit einer Mischung aus Dipropylenglykol und einem Polyoxypropylenglykol mit einer Hydroxylzahl von 250.

100 Gew.-Teile der A-Komponente und 50 Gew.-Teile der B-Komponente wurden bei 22°C nach dem Reaktionsspritzgußverfahren auf einer Hochdruckdosieranlage vom Typ Puromat ® 80/40 der Firma Elastogran Polyurethane GmbH, Geschäftsbereich Maschinenbau, 8021 Straßlach, gemischt und in ein auf 40°C temperiertes metallisches Formwerkzeug mit den inneren Abmessungen 200x200x40 mm in einer solchen Menge eingebracht, daß sich nach dem Verschließen des Formwerkzeugs ein Verdichtungsgrad von 1,2 einstellte.

Der Formkörper wurde nach 3,5 Minuten entformt. Man erhielt eine weichelastische Polyurethanplatte mit einem zelligen Kern, einer verdichteten Randzone und einer porenfreien Oberfläche.

Wurde die Reaktionsmischung in einem offenen Formwerkzeug aufschäumen gelassen, so erhielt man einen Schaumkörper mit der Gesamtdichte von 352 g/Liter (0,352 g/cm$^3$). Hierbei gemessen wurden eine Startzeit von 24 Sekunden und eine Steigzeit von 58 Sekunden.

Beispiel 4

A-Komponente: Mischung, bestehend aus

| | |
|---|---|
| 46,68 | Gew.-Teilen eines mit Glycerin gestarteten Polyoxypropylen (81,5 Gew.-%)-polyoxyethylen (18,5 Gew.-%)-polyols mit einer Hydroxylzahl von 29, |
| 14,50 | Gew.-Teilen eines mit Trimethylolpropan gestarteten Polyoxypropylen (80 Gew.-%)-polyoxyethylen (20 Gew.-%)-polyols mit einer Hydroxylzahl von 27, |
| 18,00 | Gew.-Teilen eines mit Glycerin gestarteten Polyoxypropylen (86,5 Gew.-%)-polyoxyethylen (13,5 Gew.-%)-polyols mit einer Hydroxylzahl von 35, |
| 9,90 | Gew.-Teilen Butandiol-1,4, |
| 1,30 | Gew.-Teilen einer 25 gew.-%igen Lösung von Triethylendiamin in Butandiol-1,4, |
| 0,02 | Gew.-Teilen Dibutylzinndilaurat, |
| 9,00 | Gew.-Teilen eines Mordenits in der H-Form (Zeolon ® 900 H der Firma Norton, USA) und |
| 0,60 | Gew.-Teilen Wasser. |

B-Komponente: analog Beispiel 3

100 Gew.-Teile der A-Komponente und 55 Gew.-Teile der B-Komponente wurden bei 22°C nach dem Reaktionsspritzgußverfahren auf einer Hochdruckdosieranlage vom Typ Puromat ® 80/40 der Firma Elastogran Polyurethane GmbH, Geschäftsbereich Maschinenbau, 8021 Straßlach, gemischt und in ein auf 40°C temperiertes metallisches Formwerkzeug mit den inneren Abmessungen 200x200x40 mm in einer solchen Menge eingebracht, daß sich nach dem Verschließen des Formwerkzeugs ein Verdichtungsgrad von 2,4 einstellte.

Der Formkörper wurde nach 3,5 Minuten entformt. Man erhielt eine weichelastische Polyurethanplatte mit einem zelligen Kern, einer verdichteten Randzone und einer porenfreien Oberfläche mit einer Shore-A-Härte von 65.

Wurde die Reaktionsmischung in einem offenen Formwerkzeug aufschäumen gelassen, so erhielt man einen Schaumkörper mit der Gesamtdichte von 160 g/Liter (0,16 g/cm$^3$). Hierbei gemessen wurden eine Startzeit von 23 Sekunden und eine Steigzeit von 61 Sekunden.

Beispiel 5

A-Komponente: Mischung, bestehend aus

| | |
|---|---|
| 46,58 | Gew.-Teilen eines mit Glycerin gestarteten Polyoxypropylen (81,5 Gew.-%)-polyoxyethylen (18,5 Gew.-%)-polyols mit einer Hydroxylzahl von 29, |
| 14,40 | Gew.-Teilen eines mit Trimethylolpropan gestarteten Polyoxypropylen (80 Gew.-%)-polyoxyethylen (20 Gew.-%)-polyols mit einer Hydroxylzahl von 27, |
| 17,95 | Gew.-Teilen eines mit Glycerin gestarteten Polyoxypropylen (86,5 Gew.-%)-polyoxyethylen (13,5 Gew.-%)-polyols mit einer Hydroxylzahl von 35, |
| 9,85 | Gew.-Teilen Butandiol-1,4, |
| 1,30 | Gew.-Teilen einer 25 gew.-%igen Lösung von Triethylendiamin in Butandiol-1,4, |
| 0,02 | Gew.-Teilen Dibutylzinndilaurat, |

(fortgesetzt)

| 9,00 | Gew.-Teilen eines Mordenits in der H-Form (Zeolon ® 900 H der Firma Norton, USA) und |
| 0,90 | Gew.-Teilen Wasser. |

B-Komponente: analog Beispiel 3

100 Gew.-Teile der A-Komponente und 60 Gew.-Teile der B-Komponente wurden analog den Angaben des Beispiels 3 gemischt und in demselben Formwerkzeug, jedoch bei einem Verdichtungsgrad von 2,2 aufschäumen gelassen.

Der Formkörper wurde nach 4 Minuten entformt. Man erhielt eine weichelastische Polyurethanplatte mit einem zelligen Kern, einer verdichteten Randzone und einer kompakten, porenfreien Oberfläche, die eine Shore-A-Härte von 50 besaß.

Beim Verschäumen der Reaktionsmischung in einem offenen Formwerkzeug erhielt man einen Schaumstoffkörper mit einer Gesamtdichte von 125 g/Liter (0,125 g/cm$^3$). Hierbei gemessen wurden eine Startzeit von 22 Sekunden und eine Steigzeit von 68 Sekunden.

Vergleichsbeispiel III

A-Komponente: Mischung, bestehend aus

| 44,00 | Gew.-Teilen eines mit Glycerin gestarteten Polyoxypropylen (81,5 Gew.-%)-polyoxyethylen (18,5 Gew.-%)-polyols mit einer Hydroxylzahl von 29, |
| 13,60 | Gew.-Teilen eines mit Trimethylolpropan gestarteten Polyoxypropylen (80 Gew.-%)-polyoxyethylen (20 Gew.-%)-polyols mit einer Hydroxylzahl von 27, |
| 17,00 | Gew.-Teilen eines mit-Glycerin gestarteten Polyoxypropylen (86,5 Gew.-%)-polyoxyethylen (13,5 Gew.-%)-polyols mit einer Hydroxylzahl von 35, |
| 9,30 | Gew.-Teilen Butandiol-1,4, |
| 1,23 | Gew.-Teilen einer 25 gew.-%igen Lösung von Triethylendiamin in Butandiol-1,4, |
| 0,02 | Gew.-Teilen Dibutylzinndilaurat, |
| 6,80 | Gew.-Teilen Schwarzpaste N der Bayer AG und |
| 8,05 | Gew.-Teilen Trichlorfluormethan. |

B-Komponente: analog Beispiel 3

100 Gew.-Teile der A-Komponente und 50 Gew.-Teile der B-Komponente wurden analog den Angaben des Beispiels 3 gemischt und in demselben Formwerkzeug, jedoch bei einem Verdichtungsgrad von 3,1 aufschäumen gelassen.

Der Formkörper wurde nach 4 Minuten entformt. Man erhielt eine weichelastische Polyurethanplatte mit einem zelligen Kern, einer verdichteten Randzone und einer kompakten, porenfreien Oberfläche, die eine Shore-A-Härte von 86 besaß.

Beim Verschäumen der Reaktionsmischung in einem offenen Formwerkzeug erhielt man einen Schaumstoffkörper mit einer Gesamtdichte von 190 g/Liter (0,19 g/cm$^3$). Hierbei gemessen wurden eine Startzeit von 18 Sekunden und eine Steigzeit von 50 Sekunden.

Die nach Angaben der Beispiele 3 bis 5 und Vergleichsbeispiel III hergestellten weichelastischen Integralschaumstoff-Formkörper besitzen vorzugsweise eine Gesamtdichte von 500 (0,5) bis 900 g/Liter (0,9 g/cm$^3$) und eine Shore-A-Härte von 70 bis 90. Die Produkte besitzen sehr gute mechanische Eigenschaften und sind gegen Witterungseinflüsse äußerst stabil. Sie finden daher vorzugsweise Verwendung in der Automobilindustrie z.B. für Stoßhörner, Spoiler, Rammschutzleisten, Faltenbälge oder Förderkränze.

Beispiel 6

A-Komponente: Mischung, bestehend aus

| | |
|---|---|
| 8,50 | Gew.-Teilen eines Gemisches, bestehend aus 85 Gew.-Teilen eines mit Glycerin gestarteten Polyoxypropylen (86 Gew.-%)-polyoxyethylen (14 Gew.-%)-polyols mit einer Hydroxylzahl von 35 und 15 Gew.-Teilen eines synthetischen Silikats (Transpafill ® der Degussa AG, Frankfurt), |
| 56,30 | Gew.-Teilen eines mit Glycerin gestarteten Polyoxypropylen (81,5 Gew.-%)-polyoxyethylen (18,5 Gew.-%)-polyols mit einer Hydroxylzahl von 29, |
| 17,17 | Gew.-Teilen eines mit Trimethylolpropan gestarteten Polyoxypropylen (80 Gew.-%)-polyoxyethylen (20 Gew.-%)-polyols mit einer Hydroxylzahl von 27, |
| 6,12 | Gew.-Teilen Butandiol-1,4, |
| 0,42 | Gew.-Teilen Ethylenglykol, |
| 0,20 | Gew.-Teilen Siliconstabilisator DC 193, |
| 0,78 | Gew.-Teilen Wasser, |
| 1,44 | Gew.-Teilen einer 25 gew.-%igen Lösung von Triethylendiamin in Butandiol-1,4, |
| 0,03 | Gew.-Teilen Dibutylzinndilaurat und |
| 9,04 | Gew.-Teilen eines Mordenits in der H-Form (Zeolon ® 900 H der Firma Norton, USA). |

B-Komponente: analog Beispiel 3

100 Gew.-Teile der A-Komponente und 55 Gew.-Teile der B-Komponente wurden analog den Angaben des Beispiels 3 gemischt und in demselben Formwerkzeug, jedoch bei einem Verdichtungsgrad von 1,7 aufschäumen gelassen.

Der Formkörper wurde nach 3,5 Minuten entformt. Man erhielt eine weichelastische Polyurethanplatte mit einem zelligen Kern, einer verdichteten Randzone und einer kompakten, porenfreien Oberfläche, die eine Shore-A-Härte von 35 besaß.

Beim Verschäumen der Reaktionsmischung in einem offenen Formwerkzeug erhielt man einen Schaumstoffkörper mit einer Gesamtdichte von 125 g/Liter (0,125 g/cm$^3$). Hierbei gemessen wurden eine Startzeit von 19 Sekunden und eine Steigzeit von 75 Sekunden.

Vergleichsbeispiel IV

A-Komponente: Mischung, bestehend aus

| | |
|---|---|
| 8,80 | Gew.-Teilen eines Gemisches, bestehend aus 85 Gew.-Teilen eines mit Glycerin gestarteten Polyoxypropylen (86 Gew.-%)-polyoxyethylen (14 Gew.-%)-polyols mit einer Hydroxylzahl von 35 und 15 Gew.-Teilen eines synthetischen Silikats (Transpafill ® der Degussa AG, Frankfurt), |
| 58,34 | Gew.-Teilen eines mit Glycerin gestarteten Polyoxypropylen (81,5 Gew.-%)-polyoxyethylen (18,5 Gew.-%)-polyols mit einer Hydroxylzahl von 29, |
| 17,80 | Gew.-Teilen eines mit Trimethylolpropan gestarteten Polyoxypropylen (80 Gew.-%)-polyoxyethylen (20 Gew.-%)-polyols mit einer Hydroxylzahl von 27, |
| 6,35 | Gew.-Teilen Butandiol-1,4, |
| 0,43 | Gew.-Teilen Ethylenglykol, |
| 0,20 | Gew.-Teilen Siliconstabilisator DC 193, |
| 0,15 | Gew.-Teilen Wasser, |
| 1,50 | Gew.-Teilen einer 25 gew.-%igen Lösung von Triethylendiamin in Butandiol-1,4, |
| 0,03 | Gew.-Teilen Dibutylzinndilaurat und |
| 6,44 | Gew.-Teilen Trichlorfluormethan |

B-Komponente: analog Beispiel 3

100 Gew.-Teile der A-Komponente und 52,7 Gew.-Teile der B-Komponente wurden analog den Angaben des Beispiels 3 gemischt und in demselben Formwerkzeug, jedoch bei einem Verdichtungsgrad von 3,6 aufschäumen gelassen.

Der Formkörper wurde nach 3,5 Minuten entformt. Man erhielt eine weichelastische Polyurethanplatte mit einem zelligen Kern, einer verdichteten Randzone und einer kompakten, porenfreien Oberfläche, die eine Shore-A-Härte von 40 besaß.

Beim Verschäumen der Reaktionsmischung in einem offenen Formwerkzeug erhielt man einen Schaumstoffkörper mit einer Gesamtdichte von 195 g/Liter (0,195 g/cm$^3$). Hierbei gemessen wurden eine Startzeit von 15 Sekunden und eine Steigzeit von 50 Sekunden.

Beispiel 7

A-Komponente: Mischung, bestehend aus

| | |
|---|---|
| 79,75 | Gew.-Teilen eines Ethylenglykol-butandiol-1,4-polyadipats mit der Hydroxylzahl von 56, |
| 7,65 | Gew.-Teilen Ethylenglykol, |
| 1,15 | Gew.-Teilen einer 33 gew.-%igen Lösung von Triethylendiamin in Ethylenglykol, |
| 0,20 | Gew.-Teilen Glycerin (99,5 gew.-%ig), |
| 0,30 | Gew.-Teilen Triethanolamin, |
| 0,25 | Gew.-Teilen Schaumstabilisator Silicon OS 710, |
| 0,70 | Gew.-Teilen Wasser und |
| 10,00 | Gew.-Teilen eines Mordenits in der H-Form (Zeolon ® 900 H der Firma Norton, USA) |

B-Komponente: analog Beispiel 3

100 Gew.-Teile der A-Komponente und 78,5 Gew.-Teile der B-Komponente wurden analog den Angaben des Beispiels 3 gemischt und in demselben Formwerkzeug, jedoch bei einem Verdichtungsgrad von 3 aufschäumen gelassen.

Der Formkörper wurde nach 5 Minuten entformt. Man erhielt eine weichelastische Polyurethanplatte mit einem zelligen Kern, einer verdichteten Randzone und einer kompakten, porenfreien Oberfläche, die eine Shore-A-Härte von 90 besaß.

Beim Verschäumen der Reaktionsmischung in einem offenen Formwerkzeug erhielt man einen Schaumstoffkörper mit einer Gesamtdichte von 140 g/Liter (0,14 g/cm$^3$). Bei der Schaumreaktion gemessen wurden eine Startzeit von 24 Sekunden und eine Steigzeit von 70 Sekunden.

Vergleichsbeispiel V

A-Komponente: Mischung, bestehend aus

| | |
|---|---|
| 88,90 | Gew.-Teilen eines Ethylenglykol-butandiol-1,4-polyadipats mit der Hydroxylzahl von 56, |
| 8,50 | Gew.-Teilen Ethylenglykol, |
| 1,15 | Gew.-Teilen einer 33 gew.-%igen Lösung von Triethylendiamin in Ethylenglykol, |
| 0,20 | Gew.-Teilen Glycerin (99,5 gew.-%ig) |
| 0,30 | Gew.-Teilen Triethanolamin, |
| 0,25 | Gew.-Teilen Schaumstabilisator Silicon OS 710 und |
| 0,70 | Gew.-Teilen Wasser. |

B-Komponente: analog Beispiel 3

100 Gew.-Teile der A-Komponente und 78,5 Gew.-Teile der B-Komponente wurden analog den Angaben des Beispiels 3 gemischt und in demselben Formwerkzeug, jedoch bei einem Verdichtungsgrad von 2,4 aufschäumen gelassen.

Der Formkörper wurde nach 5 Minuten entformt. Man erhielt eine weichelastische Polyurethanplatte mit einem zelligen Kern, einer verdichteten Randzone und einer kompakten, porenfreien Oberfläche, die eine Shore-A-Härte von 75 besaß.

Beim Verschäumen der Reaktionsmischung in einem offenen Formwerkzeug erhielt man einen Schaumstoffkörper mit einer Gesamtdichte von 185 g/Liter (0,185 g/cm$^3$). Bei der Schaumreaktion gemessen wurden eine Startzeit von 24 Sekunden und eine Steigzeit von 70 Sekunden.

Die nach Angaben der Beispiele 6 und 7 und Vergleichsbeispiele IV und V hergestellten Polyurethan-Integralschaumstoff-Formkörper finden vorzugsweise Verwendung als Schuhsohlen.

Beispiel 8

A-Komponente: Mischung, bestehend aus

| | |
|---|---|
| 43,28 | Gew.-Teilen eines mit Glycerin gestarteten Polyoxypropylen (86,5 Gew.-%)-polyoxyethylen (13,5 Gew.-%)-polyols mit der Hydroxylzahl 35, |
| 24,15 | Gew.-Teilen eines Pfropf-polyether-polyols mit einer Hydroxylzahl von 28, hergestellt aus einem mit Glycerin gestarteten Polyoxypropylen-polyoxyethylen-polyol als Pfropfgrundlage und einer Mischung aus Styrol und Acrylnitril im Gewichtsverhältnis 12:8 als Pfropfauflage (Polyurax U 26-03 der Firma BP, Deutschland) |
| 9,66 | Gew.-Teilen eines mit Trimethylolpropan gestarteten Polyoxypropylen (80 Gew.-%)-polyoxyethylen (20 Gew.-%)-polyols mit der Hydroxylzahl 27, |
| 0,77 | Gew.-Teilen einer 33 gew.-%igen Lösung von Triethylendiamin in Ethylenglykol, |
| 0,58 | Gew.-Teilen Glycerin (99,5 gew.-%ig), |
| 5,31 | Gew.-Teilen Ethylenglykol, |
| 0,04 | Gew.-Teilen Stabilisator auf Silikonbasis (Tegostab® B2219 der Goldschmidt AG, Essen), |
| 5,80 | Gew.-Teilen Schwarzpaste N der Bayer AG, |
| 0,52 | Gew.-Teilen Wasser und |
| 9,82 | Gew.-Teilen eines Mordenits in der H-Form (Zeolon® 900 H der Firma Norton, USA). |

B-Komponente:

Mischung, bestehend aus

70 Gew.-Teilen eines Urethangruppen enthaltenden Quasiprepolymeren mit einem NCO-Gehalt von 23 Gew.-%, hergestellt durch Umsetzung von 4,4'-Diphenylmethan-diisocyanat mit einer Mischung aus Dipropylenglykol und einem Polyoxypropylenglykol mit einer Hydroxylzahl von 250 und 30 Gew.-Teilen eines Urethangruppen enthaltenden Quasiprepolymeren mit einem NCO-Gehalt von 28 Gew.-%, hergestellt durch Umsetzung einer Mischung aus 55 Gew.-Teilen 4,4'-Diphenylmethan-diisocyanat und 45 Gew.-Teilen einer Mischung aus Diphenylmethan-diisocyanaten und Polyphenyl-polymethylen-polyisocyanaten mit 9 Gew.-Teilen eines Polyoxypropylenglykols mit einer Hydroxylzahl von 250.

100 Gew.-Teile der A-Komponente und 39,5 Gew.-Teile der B-Komponente wurden bei 22°C nach dem Reaktionsspritzgußverfahren auf einer Hochdruckdosieranlage vom Typ Puromat® 80/40 der Firma Elastogran Polyurethane GmbH, Geschäftsbereich Maschinenbau, 8021 Straßlach, gemischt und in ein auf 45°C temperiertes metallisches Formwerkzeug mit der Raumform eines Automobillenkrads in einer solchen Menge eingebracht, daß sich beim Aufschäumen ein Verdichtungsgrad von 4 einstellte.

Der Formkörper wurde nach 3,5 Minuten entformt. Er besaß einen zelligen Kern, eine verdichtete Randzone und eine kompakte, porenfreie Oberfläche mit einer Shore-A-Härte von 72.

Beim Verschäumen der Reaktionsmischung in einem offenen Formwerkzeug erhielt man einen Schaumstoffkörper mit einer Gesamtdichte von 185 g/Liter (0,185 g/cm$^3$). Bei der Schaumreaktion gemessen wurde eine Startzeit von 17 Sekunden und eine Steigzeit von 68 Sekunden.

Beispiel 9

Man verfuhr analog den Angaben des Beispiels 5, verwendete jedoch anstelle des Mordenits in der H-Form (Zeolon® 900 H) einen mit 7 Gew.-% n-Hexan gesättigten ZSM-12, der einen Hohlraumdurchmesser von 0,62 x 0,57 x 0,55 nm aufwies. Zu dessen Herstellung wurde calcinierter ZSM-12 mit n-Hexan unter Rückflußkühlung behandelt.

Die hergestellte Polyurethan-Integralschaumstoffplatte besaß einen zelligen Kern, eine verdichtete Randzone und eine kompakte, porenfreie Oberfläche.

Beispiel 10

A-Komponente: Mischung, bestehend aus

```
55,7    Gew.-Teilen eines mit Glycerin gestarteten Polyoxypropylen
        (81,5 Gew.-%)-polyoxyethylen (19,5 Gew.-%)-polyols mit einer
        Hydroxylzahl von 29,

25,77   Gew.-Teilen eines Pfropf-polyether-polyols mit einer Hydroxylzahl
        von 28, hergestellt aus einem mit Glycerin gestarteten Polyoxypropylen-polyoxyethylen-polyol als Pfropfgrundlage und einer
        Mischung aus Styrol und Acrylnitril im Gewichtsverhältnis 12:8
        als Pfropfauflage (Polyurax ® U26-03 der Firma BP, Deutschland)

 6,4    Gew.-Teilen Ethylenglykol,

 0,83   Gew.-Teilen einer 25 gew.-%igen Lösung von Triethylendiamin in
        1.4-Butandiol,


 0,1    Gew.-Teilen einer 33 gew.-%igen Lösung von Triethylendiamin in
        Ethylenglykol,

 0,2    Gew.-Teilen Zusatzmittel SM der Bayer AG,

 1,0    Gew.-Teilen Wasser und

 10     Gew.-Teilen Siliciumaluminiumphosphat-5 (SAPO-5).
```

B-Komponente: analog Beispiel 8

100 Gew.-Teile der A-Komponente und 63,11 Gew.-Teile der B-Komponente wurden analog den Angaben des Beispiels 3 gemischt und in demselben Formwerkzeug mit einem Verdichtungsgrad von 2,4 aufschäumen gelassen.

Der Formkörper wurde nach 3,5 Minuten entformt. Man erhielt eine weichelastische Polyurethanplatte mit einem zelligen Kern, einer verdichteten Randzone und einer kompakten, porenfreien Oberfläche, die eine Shore-A-Härte von 65,7 besaß.

Beim Verschäumen der Reaktionsmischung in einem offenen Formwerkzeug erhielt man einen Schaumstoffkörper mit der Gesamtdichte von 158 g/Liter (0,158 g/cm$^3$). Bei der Schaumreaktion gemessen wurden eine Startzeit von 31 Sekunden und eine Steigzeit von 95 Sekunden.

Beispiel 11

A-Komponente: analog Beispiel 10, jedoch unter Zusatz von

10   Gew.-Teilen Clinopthilolith (Zeolon® 700 der Firma Norton, USA) mit einem Hohlraumdurchmesser von 0,76 bis 0,3 nm anstelle des Siliciumaluminiumphosphats-5 (SAPO-5).

B-Komponente: analog Beispiel 8

100 Gew.-Teile der A-Komponente und 63,11 Gew.-Teile der B-Komponente wurden analog den Angaben des Beispiels 3 gemischt und in demselben Formwerkzeug mit einem Verdichtungsgrad von 2,4 aufschäumen gelassen.

Der Formkörper wurde nach 3,5 Minuten entformt. Man erhielt eine weichelastische Polyurethanplatte mit einem zelligen Kern, einer verdichteten Randzone und einer kompakten, porenfreien Oberfläche, die eine Shore-A-Härte von 65,7 besaß.

Beim Verschäumen der Reaktionsmischung in einem offenen Formwerkzeug erhielt man einen Schaumstoffkörper mit der Gesamtdichte von 156 g/Liter (0,156 g/cm$^3$).

Bei der Schaumreaktion gemessen wurden eine Startzeit von 28 Sekunden und eine Steigzeit von 90 Sekunden.

Beispiel 12

A-Komponente: Mischung, bestehend aus

| 58,10 | Gew.-Teilen eines mit Glycerin gestarteten Polyoxypropylen (86,5 Gew.-%)-polyoxyethylen (13,5 Gew.-%)-polyols mit der OH-Zahl 35, |
|---|---|
| 10,50 | Gew.-Teilen eines mit Glycerin gestarteten Polyoxypropylen (81,5 Gew.-%)-polyoxyethylen(18,5 Gew.-%)-polyols mit der OH-Zahl 29, |
| 20,0 | Gew.-Teilen eines mit Ethylendiamin gestarteten Polyoxypropylen-polyols mit der OH-Zahl 768, |
| 0,6 | Gew.-Teilen einer 33 gew.-%igen Lösung von Triethylendiamin im Dipropylenglykol, |
| 0,1 | Gew.-Teilen eines Schaumstabilisators auf Siliconbasis (Stabilisator OS 710 der Bayer AG), |
| 0,1 | Gew.-Teilen eines Schaumstabilisators auf Basis sulfatisiertem Rizinusöl (Stabilisator SM der Bayer AG), |
| 0,6 | Gew.-Teilen Wasser und |
| 10,0 | Gew.-Teilen eines Mordenits, der in der $NH_4^{\oplus}$-Form vorlag und hergestellt wurde durch Ionenaustausch des Mordenits in der H-Form (Zeolon® 900 H der Firma Norton, USA) mit $NH_4NO_3$ |

B-Komponente: analog Beispiel 1

100 Gew.-Teile der A-Komponente und 58,85 Gew.-Teile der B-Komponente wurden bei 22°C nach dem Reaktionsspritzgußverfahren auf einer Hochdruckdosieranlage vom Typ Puromat® 80/40 der Firma Elastogran Polyurethane GmbH, Geschäftsbereich Maschinenbau, 8021 Straßlach, gemischt und in ein auf 40°C temperiertes, metallisches Formwerkzeug mit den inneren Abmessungen 200 x 200 40 mm in einer solchen Menge eingebracht, daß sich nach dem Verschließen des Formwerkzeuges ein Verdichtungsgrad von 3,4 einstellte.

Der Formkörper wurde nach 3,5 Minuten entformt. Man erhielt eine weichelastische Polyurethanplatte mit einem zelligen Kern, einer verdichteten Randzone und einer porenfreien Oberfläche. Die Shore-A-Härte betrug 94,5.

Wurde die Reaktionsmischung in einem offenen Formwerkzeug aufschäumen gelassen, so erhielt man einen Schaumkörper mit der Gesamtdichte von 153,2 g/Liter (0,153 g/cm$^3$). Hierbei gemessen wurden eine Startzeit von 23 Sekunden und eine Steigzeit von 101 Sekunden.

Beispiel 13

A-Komponente:

Mischung analog Beispiel 12, wobei jedoch anstelle des in der Ammoniumform vorliegenden Mordenits ein ultrastabiler Y-Zeolith (USY-Zeolith) mit einem Verhältnis von $SiO_2/Al_2O_3 = 53$, hergestellt durch Dealuminierung mit Wasserdampf, eingesetzt wurde. Derartige Molekularsiebe werden z.B. beschrieben in der US-A-4 512 961.

B-Komponente: analog Beispiel 1

Die Herstellung des Formkörpers wurde analog den Angaben des Beispiels 12, jedoch mit einem Verdichtungsgrad von 3,5 durchgeführt. Man erhielt eine Polyurethanplatte mit einer Shore-A-Härte von 95,5, die eine kompakte, porenfreie Oberfläche besaß.

Wurde die Reaktionsmischung in einem offenen Werkzeug aufschäumen gelassen, so erhielt man einen Schaumkörper mit der Gesamtdichte von 151,2 g/Liter (0,151 g/cm$^3$). Hierbei gemessen wurden eine Startzeit von 23 Sekunden und eine Steigzeit von 100 Sekunden.

Beispiel 14

A-Komponente:

Mischung analog Beispiel 12, wobei jedoch anstelle des in der Ammoniumform vorliegenden Mordenits ein bei 500° calcinierter Silicalite mit einem molaren Verhältnis $SiO_2/Al_2O_3 = 527$ und einem Na-Gehalt von 0,03 Gew.-% eingesetzt wurde. Silicalite dieser Art werden in der US-A-4 061 724 beschrieben.

Ferner betrug die in der A-Komponente enthaltene Wassermenge 0,75 Gew.-Teile.

B-Komponente: analog Beispiel 1

Die Herstellung des Formkörpers wurde analog Angaben des Beispiels 12, jedoch mit einem Verdichtungsgrad von 3,3 durchgeführt. Man erhielt eine Polyurethanplatte mit einer Shore-A-Härte von 95, die eine kompakte, porenfreie Oberfläche besaß.

Beim Verschäumen der Reaktionsmischung in einem offenen Formwerkzeug erhielt man einen Schaumstoffkörper mit der Gesamtdichte von 159 g/Liter (0,159 g/cm$^3$). Bei der Schaumreaktion gemessen wurden eine Startzeit von 25 Sekunden und eine Steigzeit von 93 Sekunden.

Beispiel 15

A-Komponente:

Mischung analog Beispiel 12, wobei jedoch anstelle des in der Ammoniumform vorliegenden Mordenits ein bei 500° calcinierter Silicalite mit einem molaren Verhältnis von $SiO_2/Al_2O_3$ = 37 000 und von Na/Al = 1500 eingesetzt wurde. Silicate dieser Art werden in der US-A-4 061 724 beschrieben.

Ferner betrug die in der A-Komponente enthaltene Wassermenge 0,75 Gew.-Teile.

B-Komponente: analog Beispiel 1

Die Herstellung des Formkörpers wurde analog den Angaben des Beispiels 12, jedoch mit einem Verdichtungsgrad von 3,4 durchgeführt. Man erhielt eine Polyurethanplatte mit einer Shore-A-Härte von 96, die eine kompakte, porenfreie Oberfläche besaß.

Beim Verschäumen der Reaktionsmischung in einem offenen Formwerkzeug erhielt man einen Schaumstoffkörper mit der Gesamtdichte von 157,4 g/Liter (0,157 g/cm$^3$). Bei der Schaumreaktion gemessen wurden bei 23°C eine Startzeit von 22 Sekunden und eine Steigzeit von 89 Sekunden.

Beispiel 16

A-Komponente:

Mischung analog Beispiel 12, wobei jedoch anstelle des in der Ammoniumform vorliegenden Mordenits ein bei 500° calcinierter ZSM-5 in der H-Form eingesetzt wurde. Calcinierter ZSM-5 dieser Art wird in der US-A-3 702 886 beschrieben.

Ferner betrug die in der A-Komponente enthaltene Wassermenge 0,45 Gew.-Teile.

B-Komponente: analog Beispiel 1

Die Herstellung des Formkörpers wurde analog den Angaben des Beispiels 12, jedoch mit einem Verdichtungsgrad von 3,3 durchgeführt. Man erhielt eine Polyurethanplatte mit einer Shore-A-Härte von 94, die eine kompakte, porenfreie Oberfläche besaß.

Beim Verschäumen der Reaktionsmischung in einem offenen Formwerkzeug erhielt man einen Schaumstoffkörper mit der Gesamtdichte von 160 g/Liter (0,16 g/cm$^3$). Bei der Schaumreaktion gemessen wurden bei 23°C eine Startzeit von 23 Sekunden und eine Steigzeit von 82 Sekunden.

Beispiel 17

A-Komponente:

Mischung analog Beispiel 12, wobei jedoch anstelle des in der Ammoniumform vorliegenden Mordenits ein bei 500° calcinierter ZSM-5 in der Na-Form eingesetzt wurde. Calcinierter ZSM-5 dieser Art wird in der US-A-3 702 886 beschrieben.

Ferner betrug die in der A-Komponente enthaltene Wassermenge 0,95 Gew.-Teile.

B-Komponente: analog Beispiel 1

Die Herstellung des Formkörpers wurde analog den Angaben des Beispiels 12, jedoch mit einem Verdichtungsgrad von 3,3 durchgeführt. Man erhielt eine Polyurethanplatte mit einer Shore-A-Härte von 94, die eine kompakte, porenfreie Oberfläche besaß.

Beim Verschäumen der Reaktionsmischung in einem offenen Formwerkzeug erhielt man einen Schaumstoffkörper mit der Gesamtdichte von 160 g/Liter (0,16 g/cm$^3$). Bei der Schaumreaktion gemessen wurden bei 23°C eine Startzeit von 29 Sekunden und eine Steigzeit von 92 Sekunden.

Beispiel 18

A-Komponente:

Mischung analog Beispiel 12, wobei jedoch anstelle des in der Ammoniumform vorliegenden Mordenits ein SAPO-11 eingesetzt wurde. SAPO-11 wird in der EP-A-251 168, Seite 90 beschrieben.

Ferner betrug die in der A-Komponente enthaltene Wassermenge 0,6 Gew.-Teile.

B-Komponente: analog Beispiel 1

Die Herstellung des Formkörpers wurde analog den Angaben des Beispiels 12, jedoch mit einem Verdichtungsgrad von 3,3 durchgeführt. Man erhielt eine Polyurethanplatte mit einer Shore-A-Härte von 93, die eine kompakte, porenfreie Oberfläche besaß.

Beim Verschäumen der Reaktionsmischung in einem offenen Formwerkzeug erhielt man einen Schaumstoffkörper mit der Gesamtdichte von 159 g/Liter (0,159 g/cm$^3$). Bei der Schaumreaktion gemessen wurden bei 23°C eine Startzeit von 24 Sekunden und eine Steigzeit von 89 Sekunden.

Beispiel 19

A-Komponente:

Mischung analog Beispiel 12, wobei jedoch anstelle des in der Ammoniumform vorliegenden Mordenits ein Ferrierit (Zeolon® 500 der Firma Norton, USA) eingesetzt wurde.

Ferner betrug die in der A-Komponente enthaltene Wassermenge 0,6 Gew.-Teile.

B-Komponente: analog Beispiel 1

Die Herstellung des Formkörpers wurde analog den Angaben des Beispiels 12, jedoch mit einem Verdichtungsgrad von 3,1 durchgeführt. Man erhielt eine Polyurethanplatte mit einer Shore-A-Härte von 89, die eine kompakte, porenfreie Oberfläche besaß.

Beim Verschäumen der Reaktionsmischung in einem offenen Formwerkzeug erhielt man einen Schaumstoffkörper mit der Gesamtdichte von 167 g/Liter (0,167 g/cm$^3$). Bei der Schaumreaktion gemessen wurden bei 23°C eine Startzeit von 25 Sekunden und eine Steigzeit von 86 Sekunden.

Beispiel 20

A-Komponente:

Mischung analog Beispiel 12, wobei jedoch anstelle des in der Ammoniumform vorliegenden Mordenits AlPO$_4$-5 eingesetzt wurde.

Zur Herstellung von AlPO$_4$-5 wurden 200 g 98 gew.-%ige Phosphorsäure und 136 g Böhmit in 335 g Wasser teilweise gelöst und suspendiert. Zu dieser Suspension wurden 678 g einer 30 gew.-%igen wäßrigen Tetrapropylammoniumhydroxidlösung hinzugefügt und die Mischung in einem Rührautoklaven bei 150°C unter autogenem Druck 43 Stunden lang zur Reaktion gebracht. Das gebildete kristalline Produkt wurde abfiltriert, bei 120°C getrocknet und bei 500°C in 16 Stunden calciniert. Das auf diese Weise hergestellte AlPO$_4$-5 enthielt 45,5 Gew.-% Al$_2$O$_3$ und 46,5 Gew.-% P$_2$O$_5$.

Ferner betrug die in der A-Komponente enthaltene Wassermenge 1,0 Gew.-Teile.

B-Komponente: analog Beispiel 1

Die Herstellung des Formkörpers wurde analog den Angaben des Beispiels 12, jedoch mit einem Verdichtungsgrad von 3,2 durchgeführt. Man erhielt eine Polyurethanplatte mit einer Shore-A-Härte von 94, die eine kompakte, porenfreie Oberfläche besaß.

Beim Verschäumen der Reaktionsmischung in einem offenen Formwerkzeug erhielt man einen Schaumstoffkörper mit der Gesamtdichte von 165 g/Liter (0,165 g/cm$^3$). Bei der Schaumreaktion gemessen wurden bei 23°C eine Startzeit von 24 Sekunden und eine Steigzeit von 85 Sekunden.

Beispiel 21

A-Komponente:

Mischung analog Beispiel 12, wobei jedoch anstelle des in der Ammoniumform vorliegenden Mordenits ein Borosilikatzeolith in der H-Form mit Pentasilstruktur verwendet wurde.

Der eingesetzte Borosilikatzeolith mit Pentasilstruktur wurde hergestellt in einer hydrothermalen Synthese durch Umsetzung von 640 g hochdispersem Siliciumdioxid, 122 g Borsäure und 8 kg einer wäßrigen 50 gew.%igen 1,6-Hexandiaminlösung in einem Rührautoklav bei 170°C unter autogenem Druck. Das gebildete kristalline Reaktionsprodukt wurde abfiltriert, mit Wasser ausgewaschen, bei 100°C 24 Stunden lang getrocknet und danach in einem Zeitraum von 24 Stunden bei 500°C calciniert. Der auf diese Weise hergestellte Borosilikatzeolith besaß einen Gehalt an SiO$_2$ von 94,2 Gew.-% und B$_2$O$_3$ von 2,3 Gew.-%.

Ferner betrug die in der A-Komponente enthaltene Wassermenge 0,3 Gew.-Teile.

B-Komponente: analog Beispiel 1

Die Herstellung des Formkörpers wurde analog den Angaben des Beispiels 12, jedoch mit einem Verdichtungsgrad von 3,3 durchgeführt. Man erhielt eine Polyurethanplatte mit einer Shore-A-Härte von 94, die eine kompakte, porenfreie Oberfläche besaß.

Beim Verschäumen der Reaktionsmischung in einem offenen Formwerkzeug erhielt man einen Schaumstoffkörper mit der Gesamtdichte von 160 g/Liter (0,16 g/cm$^3$). Bei der Schaumreaktion gemessen wurden bei 23°C eine Startzeit von 24 Sekunden und eine Steigzeit von 92 Sekunden.

Beispiel 22

A-Komponente:

Mischung analog Beispiel 12, wobei jedoch anstelle des in der Ammoniumform vorliegenden Mordenits ein ultrastabiler Y-Zeolith verwendet wurde, dessen SiO$_2$/Al$_2$O$_3$-Verhältnis auf 5 eingestellt wurde durch Behandlung mit Wasserdampf nach bekannter Methode.

Ferner betrug die in der A-Komponente enthaltene Wassermenge 1,0 Gew.-Teile.

B-Komponente: analog Beispiel 1

Die Herstellung des Formkörpers wurde analog den Angaben des Beispiels 12, jedoch mit einem Verdichtungsgrad von 3,4 durchgeführt. Man erhielt eine Polyurethanplatte mit einer Shore-A-Härte von 95, die eine kompakte, porenfreie Oberfläche besaß.

Beim Verschäumen der Reaktionsmischung in einem offenen Formwerkzeug erhielt man einen Schaumstoffkörper mit der Gesamtdichte von 156 g/Liter (0,156 g/cm$^3$). Bei der Schaumreaktion gemessen wurden bei 23°C eine Startzeit von 23 Sekunden und eine Steigzeit von 92 Sekunden.

**Patentansprüche**

1. Verfahren zur Herstellung von Fluorchlorkohlenwasserstofffreien, Urethangruppen enthaltenden, weichelastischen Formkörpern mit einem zelligen Kern und einer verdichteten Randzone durch Umsetzung von

    a) organischen und/oder modifizierten organischen Polyisocyanaten mit
    b) mindestens einer höhermolekularen Verbindung mit mindestens zwei reaktiven Wasserstoffatomen und einem Molekulargewicht von 1200 bis 8500 und gegebenenfalls
    c) mehrwertigen Alkoholen und/oder hydroxylgruppenhaltigen Polyalkylenoxiden mit Molekulargewichten kleiner als 480 als niedermolekularen Kettenverlängerungs- und/oder Vernetzungsmitteln, wobei die Komponente (b) oder ihre Mischung mit Komponente (c) eine Hydroxylzahl von kleiner als 300 mg KOH/g besitzen und das Äquivalenz-Verhältnis von NCO-Gruppen der Polyisocyanate (a) zur Summe der reaktiven Wasserstoffatome der Komponenten (b) und gegebenenfalls (c) 0,85 bis 1,50:1 beträgt,

in Gegenwart von

    d) Treibmitteln,
    e) Katalysatoren, und
    f) weiteren Zusatzstoffen

in einem geschlossenen Formwerkzeug unter Verdichtung, dadurch gekennzeichnet, daß man als Zusatzstoff (f) kristalline, mikroporöse Molekularsiebe mit einem Durchmesser der Hohlräume und einer Zutrittsöffnung zu den Hohlräumen von kleiner als 1,3 nm aus Metalloxiden oder Metallphosphaten verwendet, die Wasser gebunden haben und unter den Reaktionsbedingungen der Verschäumung abspalten.

2. Verfahren nach Anspruch 1, dadurch gekennzeichnet, daß die Metalloxide oder Metallphosphate ausgewählt sind aus der Gruppe der Aluminium-, Bor-, Eisen-, Chrom-, Vanadium-, Beryllium-, Antimon-, Arsen-, Gallium-, Silicium-, Germanium-, Titan-, Zirkon- und Hafniumoxide oder -phosphate.

3. Verfahren nach Anspruch 1, dadurch gekennzeichnet, daß die Metalloxide Mischoxide sind, die im wesentlichen bestehen aus Aluminium-Siliciumoxid, Bor-Siliciumoxid, Eisen-Siliciumoxid, Gallium-Siliciumoxid, Chrom-Siliciumoxid, Beryllium-Siliciumoxid, Vanadium-Siliciumoxid, Antimon-Siliciumoxid, Arsen-Siliciumoxid, Titan-Siliciumoxid, Aluminium-Germaniumoxid und Bor-Germaniumoxid.

4. Verfahren nach Anspruch 1, dadurch gekennzeichnet, daß das Metalloxid aus einem Siliciumdioxid mit Pentasilstruktur besteht.

5. Verfahren nach Anspruch 1, dadurch gekennzeichnet, daß man als Metalloxide Zeolithe verwendet, die eine Pentasil-, Faujasit-, Mordenit-, Erionit-, Chabazit- oder Offretitstruktur aufweisen.

6. Verfahren nach Anspruch 1, dadurch gekennzeichnet, daß die Metalloxide Aluminiumsilikatzeolithe, Borsilikatzeolithe, Eisensilikatzeolithe oder Galliumsilikatzeolithe mit Pentasilstruktur sind.

7. Verfahren nach Anspruch 1, dadurch gekennzeichnet, daß das Metalloxid ein Titansilikat mit Pentasilstruktur ist.

8. Verfahren nach Anspruch 1, dadurch gekennzeichnet, daß man als Metalloxide Zeolithe mit einem Durchmesser der Hohlräume und einer Zutrittsöffnung zu den Hohlräumen von 0,74 bis 0,41 nm verwendet.

9. Verfahren nach Anspruch 1, dadurch gekennzeichnet, daß man als Metalloxide Zeolithe mit einem $SiO_2/Al_2O_3$-Verhältnis gleich oder größer als 6 verwendet.

10. Verfahren nach Anspruch 1, dadurch gekennzeichnet, daß man als Metalloxide verwendet:

    Mordenit in der H-Form, Na-Form oder Ammoniumform,
    Offretit in der H-Form, K-Form, Na-Form oder Ammoniumform,
    Zeolith ZSM-5 in der H-Form, Na-Form oder Ammoniumform,
    Zeolith ZSM-11,
    Zeolith ZSM-12,
    Beta-Zeolith,
    Clinopthilolith,
    Ferrierit,
    ultrastabiler Y-Zeolith,
    ultrastabiler Mordenit oder
    Silicalite

oder Mischungen aus mindestens 2 der genannten Zeolithe.

11. Verfahren nach Anspruch 1, dadurch gekennzeichnet, daß man als Metallphosphate substituierte oder unsubstituierte Aluminium- oder Siliciumaluminiumphosphate verwendet.

12. Verfahren nach Anspruch 1 dadurch gekennzeichnet, daß die als Metallphosphate verwendbaren Aluminium- oder Siliciumaluminiumphosphate zusätzlich die Elemente Lithium, Beryllium, Bor, Magnesium, Gallium, Germanium, Arsen, Titan, Mangan, Eisen, Kobalt oder Zink enthalten.

13. Verfahren nach Anspruch 1, dadurch gekennzeichnet, daß die Metallphosphate ausgewählt sind aus der Gruppe A1PO$_4$, SAPO, ELAPO, ELAPSO, MeAPO oder MeAPSO.

14. Verfahren nach Anspruch 1, dadurch gekennzeichnet, daß man als Metallphosphate verwendet:

Aluminiumphosphate mit A1PO$_4$-Struktur
VPI-5 oder
MCM-9.

15. Verfahren nach Anspruch 1, dadurch gekennzeichnet, daß man die kristallinen, mikroporösen, wasserhaltigen Molekularsiebe mit einem Durchmesser der Hohlräume und einer Zutrittsöffnung zu den Hohlräumen von kleiner als 1,3 nm aus Metalloxiden oder Metallphosphaten in einer Menge von 1 bis 50 Gew.-%, bezogen auf das Gewicht der Komponenten (b) und gegebenenfalls (c), verwendet.

16. Verfahren nach Anspruch 1, dadurch gekennzeichnet, daß die höhermolekularen Verbindungen mit mindestens zwei reaktiven Wasserstoffatomen (b) oder Mischungen aus (b) und niedermolekularen Kettenverlängerungs und/ oder Vernetzungsmitteln (c) eine Hydroxylzahl von kleiner als 300 mg KOH/g besitzen.

17. Verfahren nach Anspruch 1, dadurch gekennzeichnet, daß man die kristallinen, mikroporösen, wasserhaltigen Molekularsiebe mit einem Durchmesser der Hohlräume und einer Zutrittsöffnung zu den Hohlräumen von kleiner als 1,3 nm aus Metalloxiden oder Metallphosphaten in Verbindung mit zusätzlichem Wasser und/oder physikalisch wirkendem Treibmittel mit Ausnahme von Fluorchlorkohlenwasserstoffen als Treibmittel (d) verwendet.

18. Verfahren nach Anspruch 1, dadurch gekennzeichnet, daß man den Zusatzstoff (f) in Form eines Konzentrats, bestehend aus mindestens einem kristallinen, mikroporösen, wasserhaltigen Molekularsieb mit einem Durchmesser der Hohlräume und einer Zutrittsöffnung zu den Hohlräumen von kleiner als 1,3 nm, bis 0,3 nm aus Metalloxiden oder Metallphosphaten und mindestens einer höhermolekularen Verbindung mit mindestens zwei reaktiven Wasserstoffatomen (b), verwendet.

19. Verfahren nach Anspruch 1, dadurch gekennzeichnet, daß man die Urethangruppen enthaltenden weichelastischen Formkörper mit Hilfe der RIM-Technik herstellt.

20. Verfahren nach Anspruch 1 zum Ummanteln von metallischen Behältern, vorzugsweise von Metallfässern für Getränke.

## Claims

1. A process for the production of chlorofluorocarbon-free urethane-containing soft-elastic moldings having a cellular core and a compacted peripheral zone, by reacting

   a) an organic and/or modified organic polyisocyanate with
   b) at least one relatively high-molecular-weight compound containing at least two reactive hydrogen atoms and having a molecular weight of from 1200 to 8500 and, if desired,
   c) a polyhydric alcohol and/or hydroxyl-containing polyalkylene oxide having a molecular weight of less than 480 as low-molecular-weight chain extender and/or crosslinking agent, where component (b) or a mixture thereof with component (c) has a hydroxyl number of less than 300 mg of KOH/g and the equivalent ratio between NCO groups in the polyisocyanate (a) and the total number of reactive hydrogen atoms in components (b) and, if used, (c) is from 0.85 to 1.50:1,

   in the presence of

   d) a blowing agent,
   e) a catalyst, and
   f) further additives

in a closed mold with compaction, wherein the additive (f) used is a crystalline, microporous molecular sieve which have a cavity and cavity mouth diameter of less than 1.3 nm, comprise metal oxides or metal phosphates and contain bound water, which they release under the gaiming reaction conditions.

2. A process as claimed in claim 1, wherein the metal oxides or metal phosphates are selected from the group comprising the oxides or phosphates of aluminum, boron, iron, chromium, vanadium, beryllium, antimony, arsenic, gallium, ailicon, germanium, titanium, zirconium and hafnium.

3. A process as claimed in claim 1, wherein the metal oxides are mixed oxides essentially comprising aluminum/ silicon oxide, boron/silicon oxide, iron/silicon oxide, gallium/silicon oxide, chromium/silicon oxide, beryllium/silicon oxide, vanadium/silicon oxide, antimony/silicon oxide, arsenic/silicon oxide, titanium/ silicon oxide, aluminum/germanium oxide and boron/ germanium oxide.

4. A process as claimed in claim 1, wherein the metal oxide comprises a silicon dioxide with a pentasil structure.

5. A process as claimed in claim 1, wherein the metal oxides used are zeolites which have a pentasil, faujasite, mordenite, erionite, chabazite or offretite structure.

6. A process as claimed in claim 1, wherein the metal oxides are aluminum silicate zeolites, boron silicate zeolites, iron silicate zeolites or gallium silicate zeolites having a pentasil structure.

7. A process as claimed in claim 1, wherein the metal oxide is a titanium silicate having a pentasil structure.

8. A process as claimed in claim 1, wherein the metal oxides used are zeolites having a cavity and cavity mouth diameter of from 0.74 to 0.41 nm.

9. A process as claimed in claim 1, wherein the metal oxides used are zeolites having an $SiO_2/Al_2O_3$ ratio greater than or equal to 6.

10. A process as claimed in claim 1, wherein the metal oxides used are:

> mordenite in the H form, Na form or ammonium form,
> offretite in the H form, K form, Na form or ammonium form,
> zeolite ZSM-5 in the H form, Na form or ammonium form,
> zeolite ZSM-11,
> zeolite ZSM-12,
> beta-zeolite,
> clinoptilolite,
> ferrierite,
> ultrastable Y-zeolite,
> ultrastable mordenite or
> a silicalite,

or a mixture of at least 2 of said zeolites.

11. A process as claimed in claim 1, wherein the metal phosphates used are substituted or unsubstituted aluminum phosphates or silicon/aluminum phosphates.

12. A process as claimed in claim 1, wherein the aluminum phosphates or silicon/aluminum phosphates which can be used as the metal phosphates additionally contain the elements lithium, beryllium, boron, magnesium, gallium, germanium, arsenic, titanium, manganese, iron, cobalt or zinc.

13. A process as claimed in claim 1, wherein the metal phosphates are selected from the group comprising $AlPO_4$, SAPO, ELAPO, ELAPSO, MeAPO and MeAPSO.

14. A process as claimed in claim 1, wherein the metal phosphates used are:

> aluminium phosphates with an $AlPO_4$ structure,

VPI-5 or
MCM-9.

15. A process as claimed in claim 1, wherein the crystalline, microporous, water-containing molecular sieve having a cavity and cavity mouth diameter of less than 1.3 nm comprises metal oxides or metal phosphates in an amount of from 1 to 50% by weight, based on the weight of components (b) and, if used, (c).

16. A process as claimed in claim 1, wherein the relatively high-molecular-weight compound containing at least two reactive hydrogen atoms (b) or a mixture of (b) and a low-molecular-weight chain extender and/or crosslinking agent (c) has a hydroxyl number of less than 300 mg of KOH/g.

17. A process as claimed in claim 1, wherein the crystalline, microporous, water-containing molecular sieve having a cavity and cavity mouth diameter of less than 1.3 nm comprises metal oxides or metal phosphates in combination with additional water and/or a physical blowing agent, with the exception of chlorofluorocarbons, as the blowing agent (d).

18. A process as claimed in claim 1, wherein the additive (f) is used in the form of a concentrate, comprising at least one crystalline, microporous, water-containing molecular sieve which has a cavity and cavity mouth diameter of from less than 1.3 nm to 0.3 nm and comprises metal oxides or metal phosphates, and at least one relatively high-molecular-weight compound containing at least two reactive hydrogen atoms (b).

19. A process as claimed in claim 1, wherein the urethane-containing soft-elastic moldings are produced by reaction injection molding.

20. A process as claimed in claim 1 for covering metallic containers, preferably metal barrels for drinks.


**Revendications**

1. Procédé de fabrication d'articles moulés élastiques, mous, contenant des radicaux uréthanne, dépourvus d'hydrocarbures fluorochlorés, avec un noyau cellulaire et une zone marginale plus dense, par la réaction

   a) de polyisocyanates organiques et/ou organiques modifiés, avec
   b) au moins un composé de poids moléculaire élevé comportant au moins deux atomes d'hydrogène réactifs et d'un poids moléculaire de 1200 à 8500 et, éventuellement,
   c) des alcools polyhydroxylés et/ou des poly(oxydes d'alkylène) contenant des radicaux hydroxyle, possédant des poids moléculaires inférieurs à 480, à titre d'agents de réticulation et/ou d'allongement des chaînes de faibles poids moléculaires, où le composant (b) ou son mélange avec le composant (c) possède un indice d'hydroxyle inférieur à 300 mg de KOH/g et le rapport d'équivalence des radicaux NCO des polyisocyanates (a) à la somme des atomes d'hydrogène réactifs des composants (b) et éventuellement (c) varie de 0,85 à 1,50:1,

   en présence

   d) d'agents porogènes,
   e) de catalyseurs et
   f) d'autres additifs,

   dans un outil de moulage, sous densification, caractérisé en ce que l'on utilise, à titre d'additif (f) des tamis moléculaires cristallins et microporeux, d'un diamètre des espaces creux et d'une ouverture d'entrée ou d'accès aux espaces creux, de moins de 1,3 nm en oxydes de métaux ou en phosphates de métaux, qui comportent de l'eau liée et qui scindent le moussage dans les conditions réactionnelles.

2. Procédé suivant la revendication 1, caractérisé en ce que l'on choisit les oxydes de métaux ou les phosphates de métaux dans le groupe formé par les oxydes ou les phosphates d'aluminium, de bore, de fer, de chrome, de vanadium, de béryllium, d'antimoine, d'arsenic, de gallium, de silicium, de germanium, de titane, de zirconium et d'hafnium.

3. Procédé suivant la revendication 1, caractérisé en ce que les oxydes de métaux sont des oxydes mixtes qui se composent, pour l'essentiel, d'oxyde d'aluminium-silicium, d'oxyde de bore-silicium, d'oxyde de fer-silicium, d'oxyde de gallium-silicium, d'oxyde de chrome-silicium, d'oxyde de béryllium-silicium, d'oxyde de vanadium-silicium, d'oxyde d'antimoine-silicium, d'oxyde d'arsenic-silicium, d'oxyde de titane-silicium, d'oxyde d'aluminium-germanium et d'oxyde de bore-germanium.

4. Procédé suivant la revendication 1, caractérisé en ce que l'oxyde de métal se compose de dioxyde de silicium, à structure de pentasile.

5. Procédé suivant la revendication 1, caractérisé en ce que l'on utilise, à titre d'oxydes de métaux, des zéolites qui présentent une structure de pentasile, de faujasite, de mordénite, d'érionite, de chabasite, ou d'offrétite.

6. Procédé suivant la revendication 5, caractérisé en ce que les oxydes de métaux sont des zéolites de silicate d'aluminium, des zéolites de silicate de bore, des zéolites de silicate de fer, ou des zéolites de silicate de gallium, à structure de pentasile.

7. Procédé suivant la revendication 1, caractérisé en ce que l'oxyde de métal est le silicate de titane, à structure de pentasile.

8. Procédé suivant la revendication 1, caractérisé en ce que l'on utilise, à titre d'oxydes de métaux, des zéolites d'un diamètre des espaces creux et d'une ouverture d'entrée ou d'accès aux espaces creux de 0,74 à 0,41 nm.

9. Procédé suivant la revendication 1, caractérisé en ce que l'on utilise, à titre d'oxydes de métaux, des zéolites avec un rapport $SiO_2/Al_2O_3$ égal ou supérieur à 6.

10. Procédé suivant la revendication 1, caractérisé en ce que l'on utilise, à titre d'oxydes de métaux :

de la mordénite sous forme H, sous forme Na, ou sous forme ammonium,
de l'offrétite sous la forme H, sous la forme K, sous la forme Na, ou sous la forme ammonium,
de la zéolite ZSM-5 sous la forme H, sous la forme Na, ou sous la forme ammonium,
de la zéolite ZSM-11,
de la zéolite ZSM-12,
de la bêta-zéolite,
de la clinopthilolite,
de la ferriérite,
de la $\gamma$-zéolite ultrastable,
de la mordénite ultrastable, ou
des silicalites,

ou des mélanges d'au moins 2 des zéolites susmentionnées.

11. Procédé suivant la revendication 1, caractérisé en ce que l'on utilise, à titre de phosphates de métaux, des phosphates d'aluminium ou de silicium-aluminium, substitués ou non substitués.

12. Procédé suivant la revendication 1, caractérisé en ce que les phosphates d'aluminium ou de silicium-aluminium utilisables, à titre de phosphates de métaux contiennent complémentairement les éléments lithium, béryllium, bore, magnésium, gallium, germanium, arsenic, titane, manganèse, fer, cobalt ou zinc.

13. Procédé suivant la revendication 1, caractérisé en ce que l'on choisit les phosphates de métaux dans le groupe formé par $AlPO_4$, SAPO, ELAPO, ELAPSO, MeAPO ou MeAPSO.

14. Procédé suivant la revendication 1, caractérisé en ce que l'on utilise, à titre de phosphates de métaux:

des phosphates d'aluminium à structure d'$AlPO_4$,
VPI-5, ou
MCM-9.

15. Procédé suivant la revendication 1, caractérisé en ce que l'on utilise des tamis moléculaires cristallins, microporeux, contenant de l'eau, avec un diamètre des espaces creux et une ouverture d'entrée ou d'accès aux espaces creux de moins de 1,3 nm, constitués d'oxydes de métaux ou de phosphates de métaux, en une proportion de 1 à 50% en poids, par rapport au poids des composants (b) et éventuellement (c).

16. Procédé suivant la revendication 1, caractérisé en ce que les composés à poids moléculaires élevés avec au moins deux atomes d'hydrogène réactifs (b) ou des mélanges de (b) et d'agents de réticulation et/ou d'allongement des chaînes de faibles poids moléculaires (c) possèdent un indice d'hydroxyle inférieur à 300 mg de KOH/g.

17. Procédé suivant la revendication 1, caractérisé en ce que l'on utilise les tamis moléculaires cristallins, microporeux, contenant de l'eau, avec un diamètre des espaces creux et une ouverture d'entrée ou d'accès aux espaces creux de moins de 1,3 nm, constitués d'oxydes de métaux ou de phosphates de métaux, en liaison avec de l'eau supplémentaire et/ou un agent porogène à activité physique, à l'exception d'hydrocarbures fluorochlorés, à titre d'agent porogène (d).

18. Procédé suivant la revendication 1, caractérisé en ce que l'on utilise l'additif (f), sous la forme d'un concentré, se composant d'au moins un tamis moléculaire cristalline, microporeux, contenant de l'eau, avec un diamètre des espaces creux et une ouverture d'entrée ou d'accès aux espaces creux de moins de 1,3 nm, allant jusqu'à 0,3 nm, constitué d'oxydes de métaux ou de phosphates de métaux et d'au moins un composé de poids moléculaire élevé avec au moins deux atomes d'hydrogène réactifs (b).

19. Procédé suivant la revendication 1, caractérisé en ce que l'on fabrique les corps creux élastiques, mous, contenant des radicaux uréthanne, selon la technique de moulage à injection par réaction.

20. Procédé suivant la revendication 1, pour l'enrobage de récipients métalliques, de préférence, des récipients en métaux pour boissons.